# EUROPEAN PATENT SPECIFICATION

(11) **EP 3 300 966 B1**
(45) Date of publication and mention of the grant of the patent: **18.11.2020**
(21) Application number: 17193817.8
(22) Date of filing: 28.09.2017
(51) Int. Cl.: B60R 25/104, B60R 25/40, B60Q 5/00

(54) **A CONTROLLER FOR AN ACOUSTIC ALERTING SYSTEM FOR ELECTRIC/HYBRID VEHICLES**
STEUERGERÄT FÜR EIN AKUSTISCHES ALARMSYSTEM FÜR ELEKTRO-/HYBRIDFAHRZEUGE
ORGANE DE COMMANDE POUR UN SYSTÈME D'ALERTE ACOUSTIQUE POUR VÉHICULES ÉLECTRIQUES/HYBRIDES

(30) Priority: 28.09.2016 IT 201600097506; 04.04.2017 IT 201700036963
(43) Date of publication of application: 04.04.2018
(73) Proprietor: Vodafone Automotive S.p.A., 21100 Varese (VA) (IT)
(72) Inventor: VEDANI, Carlo, London, Greater London W2 6BY (GB); CALCAGNO, Giuseppe, London, Greater London W2 6BY (GB)
(74) Representative: Boult Wade Tennant LLP

(56) References cited:
- WO-A1-2011/098885
- WO-A1-2014/087319
- DE-A1- 10 100 218
- DE-A1-102004 007 679
- GB-A- 2 497 642
- JP-A- H07 322 403
- JP-A- 2011 245 966
- US-A1- 2002 008 644
- US-A1- 2013 106 590
- US-A1- 2015 054 642

## Description

Example embodiments presented herein relate to an acoustic alerting system for an electric/hybrid vehicle. The acoustic alerting system comprises a single controller configured to control the operations of both an internal theft alarm based system and an external Acoustic Vehicle Alerting System (AVAS) based system.

### BACKGROUND

The use of hybrid/electric or fuel cell vehicles is becoming more and more common today. Besides contributing to reduce air pollution, these vehicles have a very quiet/noiseless operation, which results also in a reduction of noise pollution. On the other hand, over time the latter feature has proven dangerous for pedestrians, cyclists and animals and the high number of accidents involving silent vehicles has led to equipping such vehicles with some kind of acoustic alerting system intended to signal their presence and/or motion and also to be indicative of their direction and moving status (accelerating, decelerating, etc.). Such acoustic alerting has become a legal provision supported by specific technical standards in some countries, such as Japan and the European Union. From a technical point of view, the sound of an AVAS alert for electric/hybrid vehicles typically consists of different frequencies and its amplitude and tone change to reflect the speed and acceleration of the vehicle.

It is common practice today to equip vehicles with audible alarm systems that generate a sound warning to draw attention in the event of tampering, theft attempt or the like. These systems include an alarm siren and a control circuit whose power level allows to produce an adequate sound warning. The sound warning signal is normally generated by a microcontroller through variable frequency square waves.

### BRIEF SUMMARY

It is common practice to have an AVAS based alert system and an audible theft alarm system as two separate systems. Such systems are typically provided separately as the systems have conflicting requirements. Specifically, the audible theft system is typically required to be in a concealed location such that the system will not be tampered with during a theft attempt. Furthermore, the audible theft system typically comprises a backup battery such that the theft system is still operable if the power source of the vehicle fails.

In contrast, the AVAS based alert system comprises an external speaker. Furthermore, AVAS alerting systems are typically configured to provide signals of different frequencies and amplitudes such that the tone changes may reflect the speed and acceleration of the vehicle. Thus, controls systems associated with AVAS alerting systems typically comprise a Digital Signal Processor (DSP) unit configured to adjust the amplitude and tone of an audio signal for the AVAS system in real time.

Currently, there are no means for combining the two alert systems to be operated via a single controller. Specifically, the two alert systems utilize different forms of alarms and therefore may require different types of acoustic transducers. Thus, such integration of the two alarm systems is difficult as the two systems have conflicting needs. A vehicle presence notification apparatus is disclosed in US 2013/0106590. An acoustic signalling system for electric/hybrid vehicles is disclosed in WO2014/087319.

Whereas the alarm siren is typically sited in a well-hidden and hardly accessible place, the AVAS for electric or hybrid vehicles is typically installed in a place where sound can easily spread out of the vehicle, for example, when it is used as a warning horn. Even in the event that the two functions are integrated and performed by one device, it is the AVAS acoustic transducer (e.g., an external loudspeaker) that is used to obtain also the alarm siren sound, with the drawback that the higher current consumption rate of the AVAS based transducer involves that the backup battery needed to ensure self-powering, for example, for operation in case of sabotage, has to be extremely big, heavy and expensive, which makes the integration of the two functions useless.

Thus, at least one example object of some of the example embodiments presented herein is to provide an integrated AVAS and theft based alarm system operated with the use of a single controller. Such embodiments have the example advantage of providing a cost effective and easy to implement means of performing both AVAS and antitheft alarm functionality, while still maintaining the advantages of a dedicated alerting system for electric/hybrid vehicles and reach power levels appropriate for the control of the acoustic transducers for both alarm systems. According to some of the example embodiments, a single controller may be used to selectively activate either an AVAS or antitheft alarm based system.

Accordingly, some of the example embodiments are directed towards an apparatus for an acoustic alerting system for an electric/hybrid vehicle. The apparatus comprises a control unit configured to receive, from a vehicle bus, vehicle state information. The apparatus further comprises first output in communication with a first acoustic transducer for acoustic transducer for antitheft-based alerts. The apparatus also comprises a second output in communication with a second acoustic transducer for AVAS based alerts.

If the vehicle state information is related to an antitheft condition, the control unit is further configured to generate a control signal and send the control signal to the first output for activation of the first acoustic transducer.

If the vehicle state information is related to an AVAS condition, the control unit is further configured to access a signal generator block configured to generate an acoustic signal with an envelope that varies over time, based on the vehicle state information. The control unit is further configured to send the acoustic signal to the sound output for activation of the second acoustic transducer.

Such embodiments comprise the example advantage of managing capabilities for both an antitheft alarm system and an AVAS alert system with a single control unit within a single apparatus.

Some of the example embodiments further comprise the first acoustic transducer being an internal piezoelectric acoustic transducer. Some of the example embodiments further comprise the second acoustic transducer being an external magneto dynamic acoustic transducer.

Some of the example embodiments further comprise a backup battery in connection to the first output. The backup battery may be configured to power the first acoustic transducer in a presence of a power failure of the electric/hybrid vehicle.

Some of the example embodiments further comprise the signal generator block comprising a parallel flash memory unit. The parallel flash memory unit may further comprise a plurality of stored sounds. Each of the stored sounds may be associated with a respective driving condition of the electric/hybrid vehicle for the AVAS based alert. According to some of the example embodiments, such a signal generator block may further comprise a variable attenuator configured to attenuate the stored sound to reflect the vehicle's running parameters. Some of the example embodiments further comprise the control unit being configured to select a stored sound based on the received vehicle state information. According to some of the example embodiments, the vehicle state information may be an indication that the vehicle bus is not readable and/or a theft attempt has occurred and the associated stored sound is an antitheft alert. According to some of the example embodiments, at least one of the stored sounds is a vehicle horn sound.

Some of the example embodiments further comprise the control signal being a first control signal and the control unit being further configured to generate a second control signal if the vehicle state information is related to an AVAS condition. In such embodiments, the control unit may be further configured to, if the first control signal is generated, selectively activate a first amplifier in connection to the first output via a transmission for the first control signal to the first amplifier. The control unit may also be configured to, if the second control signal is generated, selectively activate a second amplifier in connection to the second output via a transmission of the second control signal to the second amplifier.

Some of the example embodiments further comprise the control signal being a first control signal and the control unit being further configured to generate a second control signal if the vehicle state information is related to an AVAS condition. In such embodiments, the control unit may be further configured to, if the first control signal is generated, selectively activate a first driver bridge in connection to the first output via a transmission of the first control signal to the first driver bridge. The control unit may also be configured to, if the second control signal is generated, selectively activate a second driver bridge in connection to the second output via a transmission of the second control signal to the second driver bridge.

Some of the example embodiments are directed towards a computer-readable medium comprising executable instructions such that when executed by a control unit for activating an AVAS and an antitheft-based alert system. The instructions comprise process vehicle state information received from a vehicle bus. The instructions further comprise, if the vehicle state information is related to an antitheft condition, generate, via a control unit, a control signal and send the control signal to a first output in communication with a first acoustic transducer for activation of an antitheft alert. The instructions further comprise, if the vehicle state information is related to an AVAS condition, generate, via the control unit, an acoustic signal with an envelope that varies over time, based on the vehicle state information and send the acoustic signal to a second output in communication with a second acoustic transducer for activation of an AVAS alert.

Some of the example embodiments are directed towards an apparatus for providing an acoustic alerting system for an electric/hybrid vehicle. The apparatus comprises processing means to process vehicle state information received from a vehicle bus. If the vehicle state information is related to an antitheft condition, the apparatus further comprises a generating means to generate a control signal and send the control signal to a first output in communication with a first acoustic transducer for activation of an antitheft alert. If the vehicle state information is related to an AVAS condition, the generating means to generate an acoustic signal with an envelope that varies over time, based on the vehicle state information and send the acoustic signal to a second output in communication with a second acoustic transducer for activation of an AVAS alert.

It should be appreciated that according to some of the example embodiments, the generating means is the control unit.

Some of the example embodiments are directed towards an apparatus for an acoustic alerting system for an electric/hybrid vehicle. The apparatus comprises a control unit configured to receive, from a vehicle bus, vehicle state information. The apparatus further comprises a signal generation block configured to generate an AVAS based alarm signal or an antitheft alarm based signal based on the vehicle state information. The apparatus further comprises a first output in communication with a first acoustic transducer for antitheft-based alerts and a second output in communication with a second acoustic transducer for AVAS based alerts. If the vehicle state information is related to an antitheft condition, the control unit is further configured to generate a control signal and send said control signal to the first output for activation of the first acoustic transducer. If the vehicle state information is related to an AVAS condition, the control unit is further configured to access a signal generator block configured to generate an acoustic signal with an envelope that varies over time, based on the vehicle state information. The control unit is further configured to send the acoustic signal to the second output for activation of the second acoustic transducer.

According to such example embodiments, one of the first or second outputs may be selectively activated via the generated control signal. Thus, from a single control unit, both an AVAS and an antitheft alert may be selectively activated.

Some of the example embodiments are directed towards an apparatus for an acoustic alerting system for an electric/hybrid vehicle. The apparatus comprises a control unit configured to receive, from a vehicle bus, vehicle state information. The apparatus further comprises a signal generation block configured to generate an AVAS based alarm signal or an antitheft-based alarm signal based on the vehicle state information. The apparatus also comprises a first output in communication with a first acoustic transducer for antitheft-based alerts and a second output in communication with a second acoustic transducer for AVAS based alerts.

If the vehicle state information is related to an antitheft condition, the control unit is further configured to generate a first control signal and send the first control signal to a first amplifier in the first output for activation of the first acoustic transducer. In such a case, the signal generation block is further configured to generate a first acoustic signal to the first output.

If the vehicle state information is related to an AVAS condition, the control unit is further configured to generate a second control signal and send the second control signal to a second amplifier in the second output for activation of the second acoustic transducer. In such a case, the signal generation block is configured to generate a second acoustic signal with an envelope that varies over time and send the second acoustic signal to the second output.

According to such example embodiments, the control unit may selectively activate the AVAS or antitheft alarm systems via an activation of amplifiers within the respective outputs of the AVAS and antitheft alarm systems.

Some of the example embodiments are directed towards an apparatus for an electric/hybrid vehicle. The apparatus comprises a control unit configured to receive, from a vehicle bus, vehicle state information. The apparatus further comprises a signal generation block configured to generate an AVAS based alarm signal or an antitheft-based alarm signal based on the vehicle state information. The apparatus further comprises a first output communication with a first acoustic transducer for antitheft-based alerts. The apparatus also comprises a second output in communication with a second acoustic transducer for AVAS based alerts.

If the vehicle state information is related to an antitheft condition, the control unit is further configured to generate a first control signal and send the first control signal to a first driver bridge in the first output for activation of the first acoustic transducer. The signal generation block is configured to generate a first acoustic alarm signal with a constant envelope and send the first acoustic alarm signal to the first output.

If the vehicle state information is related to an AVAS condition, the control unit is further configured to generate a second control signal and send the second control signal to a second driver bridge in the second output for activation of the second acoustic transducer. The signal generation block is configured to generate a second acoustic signal with an envelope that varies over time and send the second acoustic signal to the second output.

According to such example embodiments, the control unit may selectively activate the AVAS or antitheft alarm systems via an activation of driver bridge within the respective outputs of the AVAS and antitheft alarm systems.

Some of the example embodiments are directed towards a method in an apparatus for activation of an acoustic altering system for an electric/hybrid vehicle. The method may comprise any of the operational steps described above.

According to the invention there is provided an apparatus (100) for an acoustic alerting system for an electric/hybrid vehicle, the apparatus comprising:
- a control unit (1) configured to receive, from a vehicle bus, vehicle state information;
- a first acoustic transducer (8) for antitheft-based alerts;
- a first output in communication with the first acoustic transducer (8) for antitheft-based alerts;
- a second output configured for communication with a second acoustic transducer (6) for Acoustic Vehicle Alerting System, AVAS, based alerts;
   wherein,
- if the vehicle state information is related to an antitheft condition, the control unit (1) is further configured to generate a control signal and send said control signal to the first output for activation of the first acoustic transducer (8); and
- if the vehicle state information is related to an AVAS condition, the control unit (1) is further configured to access a signal generator block (2, 3, 4) configured to generate an acoustic signal, based on the vehicle state information including at least one vehicle's running parameter, the control unit is further configured to send said acoustic signal to the second output for activation of the second acoustic transducer,
said signal generator block (2, 3, 4) comprising at least one memory (2) storing acoustic signal samples.

If the vehicle state information is related to an AVAS condition said signal generator block (2, 3, 4) is configured to generate said acoustic signal by causing playing back at least part of said acoustic signal samples contained in said memory (2).

If the vehicle state information is related to the AVAS condition, control unit (1) is configured to cause adaptation of said acoustic signal in accordance to said at least one vehicle's running parameter.

Said vehicle's running parameter comprises at least an electronic data of speed and/or acceleration, and wherein said adaptation at least comprises a frequency shift of the acoustic signal depending at least on said electronic data.

Preferably said acoustic signal samples are numeric acoustic signal samples, each one sampled over a predetermined number of bits.

According to the present disclosure, vehicle state information comprises electronic data of vehicle running parameter.

According to a non-limiting aspect, said control unit (1) is configured to cause said playback of at least part of said acoustic signal samples with a playback frequency depending on said at least one vehicle's running parameter, said playback frequency imposing said frequency shift.

According to a non-limiting aspect, said control unit is in particular configured to cause said playing back of said acoustic signal samples with a playback frequency depending at least on said electronic data of speed of said vehicle.

According to a non-limiting aspect, the signal generator block (2, 3, 4) further comprises a variable attenuator (4) configured to attenuate the acoustic signal to reflect the vehicle's running parameters.

According to a non-limiting aspect, signal generator block (2, 3, 4) further comprises a variable attenuator (4) configured to either attenuate or amplify the acoustic signal to reflect the vehicle's running parameter, said vehicle's running parameter preferably comprising at least an electronic data of speed and/or acceleration,

According to a non-limiting aspect, the variable attenuator (4) is configured for either attenuation or amplification of said acoustic signal in accordance to at least said electronic data of speed and/or acceleration and in particular by producing on an output thereof an acoustic signal whose power and/or amplitude is directly proportional to said electronic data of at least acceleration.

According to a non-limiting aspect, the signal generator block (2, 3, 4) comprises at least one memory (2) storing acoustic signal samples and said variable attenuator (4) is electrically connected downstream to an output of said memory (2), said variable attenuator (4) being configured for receiving frequency shifted acoustic signal samples.

According to a non-limiting aspect, the variable attenuator (4) is electrically connected downstream to an output of said memory (2), said variable attenuator (4) being configured for receiving said acoustic signal samples already frequency shifted.

Preferably said acoustic signal is an acoustic signal with an envelope that varies over time.

According to a non-limiting aspect, if the vehicle state information is related to an antitheft condition, said control signal generated by said control unit (1) further provides an acoustic signal modulated according to a predetermined modulation scheme for activation of the first acoustic transducer (8).

According to a non-limiting aspect, said signal generator block (2, 3, 4) comprises at least one memory (2) storing acoustic signal samples, and wherein if the vehicle state information is related to an antitheft condition said signal generator block (2, 3, 4) is configured to generate said acoustic signal by causing playing back at least part of said acoustic signal samples contained in said memory (2).

According to a non-limiting aspect, said signal generator block (2, 3, 4) comprises at least one memory (2) storing acoustic signal samples, the apparatus comprising at least a backup battery (11), electrically connected with at least said control unit (1); said apparatus (100) comprising at least a backup powering configuration wherein said backup battery (11) feeds said control unit (1) leaving said memory (2) unpowered, said backup powering configuration taking place in correspondence of said antitheft condition.

According to a non-limiting aspect, the first acoustic transducer (8) is an internal piezoelectric acoustic transducer.

According to a non-limiting aspect, said internal piezoelectric acoustic transducer is a passive internal piezoelectric acoustic transducer. According to a non-limiting aspect, said apparatus comprises a signal generator block (2, 3, 4), and an amplifier (5) electrically connected to the output of said signal generator block (2, 3, 4), said amplifier (5) being provided with a signal output which provided on an output of the apparatus; said amplifier (5) being selectively activated in case of said AVAS condition.

According to a non-limiting aspect, said apparatus further comprises a voltage step-up converter (9) and a driver bridge (8) having at least a first input electrically connected to said control unit and a second input electrically connected to said driver voltage step-up converter (9).

According to a non-limiting aspect, said backup battery (11) is electrically connected and at least temporarily provides electric power only to said control unit, to said voltage step-up converter, and to said voltage bridge.

According to a non-limiting aspect, said backup battery is in connection to the first output, and is configured to power the first acoustic transducer in a presence of a power failure of the electric/hybrid vehicle.

According to a non-limiting aspect, the second acoustic transducer is an external magneto-dynamic acoustic transducer, in particular a passive transducer.

According to a non-limiting aspect, the signal generator block comprises a parallel flash memory comprising a plurality of stored sounds, wherein each stored sound is associated with a respective driving condition of the electric/hybrid vehicle for the AVAS based alert.

According to a non-limiting aspect, the vehicle state information is an indication that a theft attempt has occurred and/or the vehicle bus is not readable and the associated stored sound is an antitheft alert.

Further according to a non-limiting aspect, the control signal is a first control signal and wherein the control unit (1) is further configured to generate a second control signal if the vehicle state information is related to an AVAS condition; wherein the control unit (1) is further configured to:
- if the first control signal is generated, selectively activate a first amplifier (7) in connection to the first output via a transmission of the first control signal to the first amplifier; and
- if the second control signal is generated, selectively activate a second amplifier (5) in connection to the second output via a transmission of the second control signal to the second amplifier (5).

According to a non-limiting aspect, the control unit is configured to select a stored sound based on the received vehicle state information.

According to a non-limiting aspect, the control unit is further configured to vary a memory scanning speed with respect to a change of tone of the sound in connection with the vehicle state information.

According to a non-limiting aspect, the vehicle state information is an indication that a theft attempt has occurred and/or the vehicle bus is not readable and the associated stored sound is an antitheft alert.

According to a non-limiting aspect, at least one of the stored sounds is a vehicle horn sound.

According to a non-limiting aspect, the control signal is a first control signal and wherein the control unit is further configured to generate a second control signal if the vehicle state information is related to an AVAS condition; wherein the control unit is further configured to:
- if the first control signal is generated, selectively activate a first amplifier in connection to the first output via a transmission of the first control signal to the first amplifier; and,
- if the second control signal is generated, selectively activate a second amplifier in connection to the second output via a transmission of the second control signal to the second amplifier.

According to a non-limiting aspect, the control signal is a first control signal and wherein the control unit is further configured to generate a second control signal if the vehicle state information is related to an AVAS condition; wherein the control unit is further configured to:
- if the first control signal is generated, selectively activate a first driver bridge in connection to the first output via a transmission of the first control signal to the first driver bridge; and,
- if the second control signal is generated, selectively activate a second driver bridge in connection to the second output via a transmission of the second control signal to the second driver bridge.

In a further aspect of the present disclosure there is described a method for providing an acoustic alerting system for an electric/hybrid vehicle, the method comprising:
- electronically processing vehicle state information received from a vehicle bus (13);
- if the vehicle state information is related to an antitheft condition, generating, via a control unit (1), a control signal and sending the control signal to a first output in communication with a first acoustic transducer (8) for activation of an antitheft alert; and
- if the vehicle state information is related to an Acoustic Vehicle Alerting System, AVAS, condition, generating, via the control unit (1), an acoustic signal, based on the vehicle state information and sending the acoustic signal to a second output in communication with a second acoustic transducer (6) for activation of an AVAS alert.

Generating of the acoustic signal further comprises retrieving, from a memory (2), one or more acoustic signal samples, associated with the AVAS condition, and providing for playing them back.

Generating of the acoustic signal further comprises
- determining at least electronic data of speed and/or acceleration from data received from said vehicle bus (13) or receiving electronic data of speed and/or acceleration from said vehicle bus (13); and
- adapting the playback of the acoustic signal samples by changing the reproduction speed thereof thereby resulting in a rigid shifting in frequency, in accordance to said at least electronic data of speed and/or acceleration determined or received from said vehicle bus.

According to a non-limiting aspect, if the vehicle state information is related to an antitheft condition, said control signal is modulated according to a predetermined modulation scheme for activation of the first acoustic transducer (8).

Furthermore, according to a non-limiting aspect, said control signal comprises an acoustic signal being generated by said control unit (1) without accessing said memory (2) or consists in an acoustic signal being generated by said control unit (1) without accessing said memory (2).

Preferably, if the vehicle state information is related to an antitheft condition further generating an acoustic signal by retrieving from or accessing to a memory (2), wherein a sound or acoustic file is stored, said file being associated at least with the AVAS condition, and providing for playing it back.

According to a non-limiting aspect, the method further comprises a step of feeding an amplifier (10) with said acoustic signal to produce an amplified acoustic signal, said amplifier (10) being commonly used both if the vehicle state information is related to an antitheft condition and if the vehicle state information is related to an AVAS condition.

According to a non-limiting aspect, said method further comprises selectively enabling wither said first acoustic transducer (8) or said second acoustic transducer (6) in accordance respectively to said antitheft condition or AVAS condition and feeding said amplified acoustic signal to said first acoustic transducer (8) and second acoustic transducer (6).

According to a non-limiting aspect, said control unit (1) is normally fed by a first battery (14), and comprising providing a backup battery (11) electrically connected to at least said control unit (1) and to an amplifier or driver bridge (7) for said fist acoustic transducer (8); said method further comprising a step of actuating a backup powering configuration wherein said backup battery (11) feeds said control unit (1) leaving said memory (2) unpowered, said backup powering configuration taking place in correspondence of said antitheft condition.

According to a non-limiting aspect, said backup battery (11) is a vehicle battery.

According to a non-limiting aspect, the generating of the acoustic signal further comprises retrieving, from a memory unit, a stored sound, for a plurality of stored sounds, associated with the AVAS condition.

According to a non-limiting aspect, in the method, if the vehicle state information is related to an Acoustic Vehicle Alerting System, AVAS, condition, generating, via the control unit, an acoustic signal with an envelope that varies over time, based on the vehicle state information.

According to a non-limiting aspect, the generating of the acoustic signal further comprises varying a memory scanning speed to change a tone of sound in connection with the vehicle state information.

According to a non-limiting aspect, the method further comprises selectively activating either the first or second output based on the vehicle state information via the generated control signal and at least one other generated control signal.

In a still further aspect of the present disclosure there is described a computer-readable medium comprising executable instructions such that when executed by a control unit for an acoustic alerting system for an electric/hybrid vehicle, the instructions comprising:
- process vehicle state information received from a vehicle bus;
- if the vehicle state information is related to an antitheft condition, generate, via a control unit, a control signal and send the control signal to a first output in communication with a first acoustic transducer for activation of an antitheft alert; and
- if the vehicle state information is related to an Acoustic Vehicle Alerting System, AVAS, condition, generate, via the control unit, an acoustic signal, based on the vehicle state information and send the acoustic signal to a second output in communication with a second acoustic transducer for activation of an AVAS alert.

According to a non-limiting aspect, the instructions to generate the acoustic signal further comprise instructions to retrieve, from a memory unit, a stored sound, for a plurality of stored sounds, associated with the AVAS condition.

According to a non-limiting aspect, the instructions comprise, if the vehicle state information is related to an Acoustic Vehicle Alerting System, AVAS, condition, generate, via the control unit, an acoustic signal with an envelope that varies over time, based on the vehicle state information.

According to a non-limiting aspect, the instructions to generate the acoustic signal further comprise instructions to vary a memory scanning speed to change a tone of sound in connection with the vehicle state information.

According to a non-limiting aspect, the method further comprises instructions to selectively activate either the first or second output based on the vehicle state information via the generated control signal and at least one other generated control signal.

In a further aspect of the present disclosure there is described an apparatus for providing an acoustic alerting system for an electric/hybrid vehicle, the apparatus comprising processing means to process vehicle state information received from a vehicle bus;
- if the vehicle state information is related to an antitheft condition, a generating means to generate a control signal and send the control signal to a first output in communication with a first acoustic transducer for activation of an antitheft alert; and
- if the vehicle state information is related to an Acoustic Vehicle Alerting System, AVAS, condition, the generating means to generate an acoustic signal, based on the vehicle state information and send the acoustic signal to a second output in communication with a second acoustic transducer for activation of an AVAS alert.

According to a non-limiting aspect, the generating means for generating the acoustic signal further comprises retrieving means to retrieve, from a memory unit, a stored sound, for a plurality of stored sounds, associated with the AVAS condition.

According to a non-limiting aspect, if the vehicle state information is related to an Acoustic Vehicle Alerting System, AVAS, condition, the generating means generate an acoustic signal with an envelope that varies over time, based on the vehicle state information.

According to a non-limiting aspect, the generating means is further configured to generate the acoustic signal by varying a memory scanning speed to change a tone of the stored sound in connection with the vehicle state information.

According to a non-limiting aspect, the apparatus further comprises activating means to selectively activate either the first or second output based on the vehicle state information via the generated control signal and at least one other generated control signal.

In a further aspect of the present disclosure there is described an apparatus for an acoustic alerting system for an electric/hybrid vehicle, the apparatus comprising:
a control unit configured to receive, from a vehicle bus, vehicle state information;
a signal generation block configured to generate an Acoustic Vehicle Alerting System, AVAS, based alarm signal or an antitheft-based alarm signal based on the vehicle state information;
a first output in communication with a first acoustic transducer for antitheft-based alerts;
a second output in communication with a second acoustic transducer for Acoustic Vehicle Alerting System, AVAS, based alerts; wherein,
if the vehicle state information is related to an antitheft condition, the control unit is further configured to generate a control signal and send said control signal to the first output for activation of the first acoustic transducer; and
if the vehicle state information is related to an AVAS condition, the control unit is further configured to access a signal generator block configured to generate an acoustic signal, based on the vehicle state information, the control unit is further configured to send said acoustic signal to the second output for activation of the second acoustic transducer.

According to a non-limiting aspect, the first acoustic transducer is an internal piezoelectric acoustic transducer.

According to a non-limiting aspect, the control unit is further configured to access a signal generator block configured to generate an acoustic signal with an envelope that varies over time, based on the vehicle state information.

According to a non-limiting aspect, the apparatus further comprises a backup battery in connection to the first output, said backup battery configured to power the first acoustic transducer in a presence of a power failure of the electric/hybrid vehicle.

According to a non-limiting aspect, the second acoustic transducer is an external magneto-dynamic acoustic transducer.

According to a non-limiting aspect, the signal generator block comprises a parallel flash memory comprising a plurality of stored sounds, wherein each stored sound is associated with a respective driving condition of the electric/hybrid vehicle for the AVAS based alert.

According to a non-limiting aspect, the control unit is configured to vary a memory scanning speed to change a tone of the stored sound in connection with the vehicle state information.

According to a non-limiting aspect, the signal generator block further comprises a variable attenuator configured to attenuate the stored sound to reflect the vehicle's running parameters.

According to a non-limiting aspect, the control unit is configured to select a stored sound based on the received vehicle state.

According to a non-limiting aspect, the vehicle state information indicates that the vehicle bus is not readable and/or a theft attempt has occurred and the associated stored sound is an antitheft alert.

According to a non-limiting aspect, at least one of the stored sounds is a vehicle horn sound.

In a further aspect of the present disclosure there is described an apparatus for an acoustic alerting system for an electric/hybrid vehicle, the apparatus comprising:
a control unit configured to receive, from a vehicle bus, vehicle state information;
a signal generation block configured to generate an Acoustic Vehicle Alerting System, AVAS, based alarm signal or an antitheft-based alarm signal based on the vehicle state information;
a first output in communication with a first acoustic transducer for antitheft-based alerts;
a second output in communication with a second acoustic transducer for Acoustic Vehicle Alerting System, AVAS, based alerts; wherein,
if the vehicle state information is related to an antitheft condition:
   the control unit is further configured to generate a first control signal and send said first control signal to a first amplifier in the first output for activation of the first acoustic transducer; and
   the signal generation block is configured to generate a first acoustic alarm signal with a constant envelope and send said first acoustic alarm signal to the first output;
if the vehicle state information is related to an AVAS condition:
   the control unit is further configured to generate a second control signal and send said second control signal to a second amplifier in the second output for activation of the second acoustic transducer; and
   the signal generation block is configured to generate a second acoustic signal, and send said second acoustic signal to the second output.

According to a non-limiting aspect, the first acoustic transducer is an internal piezoelectric acoustic transducer.

According to a non-limiting aspect, the signal generation block is configured to generate a second acoustic signal, and send said second acoustic signal to the second output.

According to a non-limiting aspect, the apparatus further comprises a backup battery in connection to the first output, said backup battery configured to power the first acoustic transducer in a presence of a power failure of the electric/hybrid vehicle.

According to a non-limiting aspect, the second acoustic transducer is an external magneto-dynamic acoustic transducer.

According to a non-limiting aspect, the first amplifier is a low-power class-D amplifier configured to drive a first high-voltage H-bridge and the second amplifier is a high-power class-D amplifier.

According to a non-limiting aspect, the signal generator block comprises a parallel flash memory comprising a plurality of stored sounds, wherein each stored sound is associated with a respective driving condition of the electric/hybrid vehicle for the AVAS based alert.

According to a non-limiting aspect, the signal generator block further comprises a variable attenuator configured to attenuate the stored sound to reflect the vehicle's running parameters.

According to a non-limiting aspect, the control unit is configured to select a stored sound based on the received vehicle state information.

According to a non-limiting aspect, the control unit is further configured to vary a memory scanning speed to change a tone of the stored sound in connection with the vehicle state information.

According to a non-limiting aspect, the vehicle state information indicates that the vehicle bus is not readable and/or a theft attempt has occurred and the associated stored sound is an antitheft alert.

According to a non-limiting aspect, at least one of the stored sounds is a vehicle horn sound.

In a further aspect of the present disclosure, there is described an apparatus for an acoustic alerting system for an electric/hybrid vehicle, the apparatus comprising:
a control unit configured to receive, from a vehicle bus, vehicle state information;
a signal generation block configured to generate an Acoustic Vehicle Alerting System, AVAS, based alarm signal or an antitheft-based alarm signal based on the vehicle state information;
a first output in communication with a first acoustic transducer for antitheft-based alerts;
a second output in communication with a second acoustic transducer for Acoustic Vehicle Alerting System, AVAS, based alerts; wherein,
if the vehicle state information is related to an antitheft condition:
   the control unit is further configured to generate a first control signal and send said first control signal to a first driver bridge in the first output for activation of the first acoustic transducer; and
   the signal generation block is configured to generate a first acoustic alarm signal with a constant envelope and send said first acoustic alarm signal to the first output;
if the vehicle state information is related to an AVAS condition:
   the control unit is further configured to generate a second control signal and send said second control signal to a second driver bridge in the second output for activation of the second acoustic transducer; and
   the signal generation block is configured to generate a second acoustic signal, and send said second acoustic signal to the second output.

According to a non-limiting aspect, the first acoustic transducer is an internal piezoelectric acoustic transducer.

According to a non-limiting aspect, said second acoustic signal is a second acoustic signal with an envelope that varies over time.

According to a non-limiting aspect, the apparatus further comprises a backup battery in connection to the first output, said backup battery configured to power the first acoustic transducer in a presence of a power failure of the electric/hybrid vehicle.

According to a non-limiting aspect, the second acoustic transducer is an external magneto-dynamic acoustic transducer.

According to a non-limiting aspect, the first driver bridge is a high-voltage H bridge driven via a low-power class D amplifier and the second driver bridge is a low-voltage H-bridge.

According to a non-limiting aspect, the signal generator block comprises a parallel flash memory comprising a plurality of stored sounds and variable tones, wherein each stored sound and variable tone is associated with a respective driving condition of the electric/hybrid vehicle for the AVAS based alert.

According to a non-limiting aspect, the signal generator block further comprises a variable attenuator configured to attenuate the stored sound to reflect the vehicle's running parameters.

According to a non-limiting aspect, the control unit is configured to select a stored sound and variable tone based on the received vehicle state information.

According to a non-limiting aspect, the control unit is further configured to vary a memory scanning speed to change a tone of the stored sound in connection with the vehicle state information.

According to a non-limiting aspect, the vehicle state information indicates that a theft attempt has occurred and/or the vehicle bus is not readable and the associated stored sound is an antitheft alert.

According to a non-limiting aspect, at least one of the stored sounds is a vehicle horn sound.

In another aspect of the present disclosure, there is described an apparatus for an acoustic alerting system for an electric/hybrid vehicle substantially as hereinbefore described, with reference to the accompanying drawings.

A further aspect of the present disclosure relates to a vehicle, comprising:
- at least one AVAS based acoustic transducer (6) arranged in a position of the body of the vehicle suitable to let the sound produced therefrom be audible outside the vehicle;
- at least one apparatus (100) for an acoustic alerting system for an electric/hybrid vehicle, fixedly arranged on the body of the vehicle in a position remote from said AVAS based acoustic transducer (6) and preferably within a motor vane, the apparatus comprising:
   - a control unit (1) configured to receive, from a vehicle bus, vehicle state information;
   - an antitheft-based acoustic transducer (8), optionally piezoelectric,
   - a first output in communication with said antitheft-based acoustic transducer (8) for antitheft-based alerts;
   - a second output in communication with said AVAS based acoustic transducer (6) for Acoustic Vehicle Alerting System, AVAS, based alerts;
   - a containing body,
      wherein the control unit (1) and the antitheft-based acoustic transducer (8) are housed within the containing body,
      a. if the vehicle state information is related to an antitheft condition, the control unit (1) is further configured to generate a control signal and send said control signal to the first output for activation of the antitheft-based acoustic transducer (8); and
      b. if the vehicle state information is related to an AVAS condition, the control unit (1) is further configured to access a signal generator block (2, 3, 4) configured to generate an acoustic signal, based on the vehicle state information, the control unit is further configured to send said acoustic signal to the second output for activation of the AVAS based acoustic transducer (6).

Further preferred aspects of the vehicle may include the aspects of the apparatus (100) according to the previous paragraphs, either taken alone or in any suitable combination.

According to a non-limiting aspect, such a vehicle may comprise at least an electric motor used for promoting motion thereof. In particular, such a vehicle may be an electric or a hybrid vehicle.

A further aspect of the present disclosure comprises a computer program product, stored in a non-transitory memory support and suitable to be executed by at least one data processing unit, said computer program product comprising code portions configured to make said data processing unit execute the following steps:
- retrieving vehicle state information electronic data from a vehicle bus (13);
- electronically processing vehicle state information received from said vehicle bus (13);
- if the vehicle state information is related to an antitheft condition, generating, via a control unit (1), a control signal and sending the control signal to a first output in communication with a first acoustic transducer (8) for activation of an antitheft alert; and
- if the vehicle state information is related to an Acoustic Vehicle Alerting System, AVAS, condition, generating, via the control unit (1), an acoustic signal, based on the vehicle state information and sending the acoustic signal to a second output in communication with a second acoustic transducer (6) for activation of an AVAS alert.

According to a non-limiting aspect, the computer program product comprises code portions for retrieving from or accessing to a memory (2), retrieving or accessing to a sound file, associated at least with the AVAS condition, and providing for playing it back.

Further according to a non-limiting aspect, the generation of the acoustic signal further comprises retrieving and/or calculating at least electronic data of speed and/or acceleration received from said vehicle bus and adapting the playback of said file by adapting the reproduction speed thereof and/or by rigidly shifting it in frequency, in connection with the vehicle state information, and in particular in accordance to said at least electronic data of speed and/or acceleration retrieved and/or received from said vehicle bus.

### BRIEF DESCRIPTION OF THE DRAWINGS

The foregoing will be apparent from the following more particular description of the example embodiments, as illustrated in the accompanying drawings in which like reference characters refer to the same parts throughout the different views. The drawings are not necessarily to scale, emphasis instead being placed upon illustrating the example embodiments.
- Figures 1-3 are illustrative examples of a single apparatus for controlling an antitheft and AVAS based alerting system for an electric/hybrid vehicle, according to some of the example embodiments; and
- Figure 4 is a simplified block diagram representing input signals that are received by the apparatus for controlling an antitheft and AVAS based alerting system for an electric/hybrid vehicle according to the present disclosure
- Figure 5 is a flow diagram depicting example operations of the apparatus' of Figures 1-3, according to some of the example embodiments.
- Figures 6-10 are further flow diagrams depicting example operations of the apparatus' of Figures 1-3, according to some of the example embodiments.

### DETAILED DESCRIPTION

In the following description, for the purposes of explanation and not limitation, specific details are set forth, such as particular components, elements, techniques, etc. in order to provide a thorough understanding of the example embodiments. However, the example embodiments may be practiced in other manners that depart from these specific details. In other instances, detailed descriptions of well-known methods and elements are omitted so as not to obscure the description of the example embodiments.

In motor vehicles, especially vehicles comprising electric motors which are used for promoting their motion, and in particular in electric/hybrid vehicles it is common practice to have an AVAS based alert system and an audible theft alarm system as two separate systems. Such systems are typically provided separately as the systems have conflicting requirements. Specifically, the audible theft system is typically required to be in a concealed location such that the system will not be tampered with during a theft attempt. Furthermore, the audible theft system typically comprises a backup battery such that the theft system is still operable if the power source of the vehicle fails.

In contrast, the AVAS based alert system comprises an external speaker. Furthermore, AVAS alerting systems are typically configured to provide signals of different frequencies and amplitudes such that the tone changes may reflect the speed and acceleration of the vehicle. Thus, controls systems associated with AVAS alerting systems typically comprise a Digital Signal Processor (DSP) unit configured to adjust the amplitude and tone of an audio signal for the AVAS system in real time.

Currently, there are no means for combining the two alert systems to be operated via a single controller. Specifically, the two alert systems utilize different forms of alarms and therefore may require different types of acoustic transducers. Thus, such integration of the two alarm systems is difficult as the two systems have conflicting needs.

Whereas the alarm siren is typically sited in a well-hidden and hardly accessible place, the AVAS for electric or hybrid vehicles is typically installed in a place where sound can easily spread out of the vehicle, for example, when it is used as a warning horn. Even in the event that the two functions are integrated and performed by one device, it is the AVAS acoustic transducer (e.g., an external loudspeaker) that is used to obtain also the alarm siren sound, with the drawback that the higher current consumption rate of the AVAS based transducer involves that the backup battery needed to ensure self-powering, for example, for operation in case of sabotage, has to be extremely big, heavy and expensive, which makes the integration of the two functions useless.

Thus, at least one example object of some of the example embodiments presented herein is to provide an integrated AVAS and theft based alarm system operated with the use of a single controller. Such embodiments have the example advantage of providing a cost effective and easy to implement means of performing both AVAS and antitheft alarm functionality, while still maintaining the advantages of a dedicated alerting system for electric/hybrid vehicles and reach power levels appropriate for the control of the acoustic transducers for both alarm systems. According to some of the example embodiments, a single controller may be used to selectively activate either an AVAS or antitheft alarm based system.

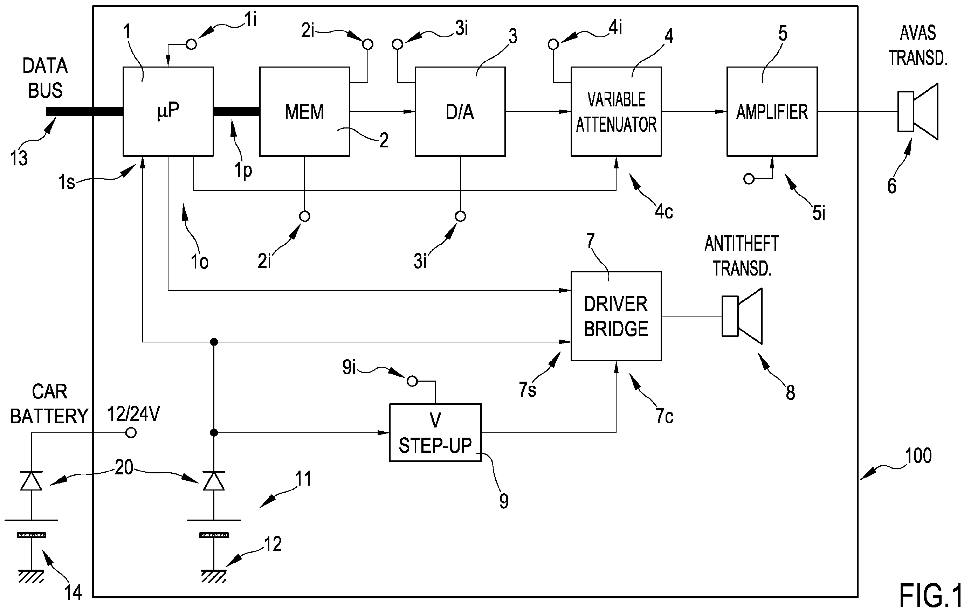

Figure 1 illustrates an example of a controller 100 comprising a single body and an electronic circuit, better described in the subsequent portion of description, which is configured to control the operation of both an AVAS and antitheft-based alarm system. As illustrated in Figure 1, the disclosed audible alerting device comprises a signal generator block 2, 3, 4 configured to generate an appropriate acoustic signal with a constant envelope or with an envelope that varies over time, depending whether it has to control an antitheft-based acoustic transducer 8 or an AVAS based acoustic transducer 6.

According to some of the example embodiments, the antitheft-based acoustic transducer may be a piezoelectric transducer. It should be appreciated that the antitheft-based acoustic transducer may also be a magneto-dynamic loudspeaker. Use of a piezoelectric transducer for the antitheft-based alarm has the example advantage of using a low amount of power consumption as well as having the ability of working with a more compact and inexpensive backup battery.

In a preferred but non-limiting embodiment, schematically represented in annexed figures 1-3, the body of the controller 100 comprises an integrated antitheft-based acoustic transducer 8 which may be preferably a piezoelectric transducer. The piezoelectric transducer has particularly small size so as to be integrated with the electronic circuit of the controller 100 in a small body which can be easily concealed in the vehicle in a well-hidden and hardly accessible place. Use of a piezoelectric transducer allows to have a high ratio between the power of sound emitted and the size of the transducer itself; thereby the integration of the transducer with the electronic circuit in a single body permits to increase the potential number of zones of a vehicle wherein the controller 100 could be installed; for a thieve, tampering the controller 100, and therefore tampering the antitheft-based acoustic transducer 8 becomes more problematic. Antitheft-based acoustic transducer 8 can be a low-bandwidth acoustic transducer; for the purposes of the present disclosure, a low-bandwidth acoustic transducer could be a transducer suitable to reproduce acoustic signals whose principal harmonic components fall substantially within the range [1 - 3] kHz.

Although example embodiments of the present disclosure differ in some circuit configurations that will be in detail analysed in the following portions of description, any embodiment of the present disclosure is always fed, at least in a standard operation configuration, by a car battery 14, that may be provided with a rectifier diode 20.

According to some of the example embodiments, the AVAS based acoustic transducer may be a magneto-dynamic loudspeaker. Use of a magneto-dynamic loudspeaker for the AVAS based alarm has the example advantage of being able to provide a wide frequency range of sounds, for example, low frequency sounds. Thanks to this aspect, the AVAS base transducer can be used to reproduce replicas of an engine sound could appear similar to a real engine sound.

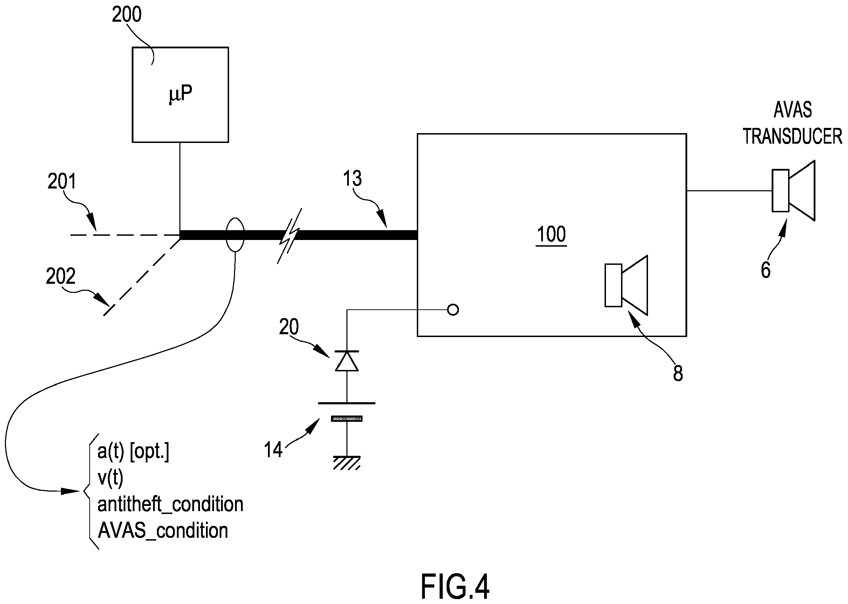

The AVAS based acoustic transducer 6, according to the example provided by figure 4, is outside the body of the controller 100, and is electrically connected to the electronic circuitry therein contained preferably via a single and waterproof connector. Once the controller 100 is installed on the vehicle, the AVAS based acoustic transducer 6 is remotely installed with respect to the controller 100. AVAS based acoustic transducer may be a high-bandwidth acoustic transducer; for the purposes of the present disclosure, an high-bandwidth acoustic transducer can be a transducer suitable to reproduce acoustic signals whose principal harmonic components fall substantially within the range of [100 - 3000] Hz.

It may be appreciated that AVAS based acoustic transducer and antitheft-based acoustic transducer are passive transducers; this is particularly true in case they are respectively a piezo-electric and a magneto-dynamic transducer. As per "passive" shall be intended that those transducers have only an input, actually a double wired input, configured to receive an acoustic signal without further amplification. The electric acoustic signal received on the inputs of the acoustic transducers is reproduced without addition of any power coming from an external source. Advantageously, for operation of controller 100, the AVAS based acoustic transducer and the antitheft acoustic transducer do not need to be powered in order to operate.

In the example provided by Figure 1, the signal generator block 2, 3, 4 is connected downstream to the control unit 1. According to some of the example embodiments, the control unit may be a microcontroller. It should be appreciated that the control unit may be any suitable computation logic, for example, a microprocessor, field programmable gate array (FPGA), or application specific integrated circuity (ASIC) or any other form of circuitry. The control unit 1 is in communication with a vehicle bus 13 which may be in the form of a vehicle bus, a Controller Area Network (CAN) and/or a Local Interconnect Network (LIN). For the purposes of clarity of representation, vehicle bus 13 is represented as a thick line.

More in particular, signal generator block 2, 3, 4 may comprise: a memory 2, whose output is electrically and preferably directly connected with a analog-to-digital converter 3, which in turn has an output which is electrically and in particular directly connected to a variable attenuator 4. As it will be clearer form the further reading of the following part of the description, such a signal generation block 2, 3, 4, is composition of blocks - as previously described - commonly shared among the example embodiments hereinafter described in detail.

Each of the control unit 1, memory 2, analog-to-digital converter 3 and variable attenuator 4 may have an own powering input 1i, 2i, 3i, 4i, which is electrically connected to the vehicle's battery 14. In particular, the connection may be direct, i.e. having the same voltage of the battery, or via voltage regulators that may reduce the voltage in accordance to the specific requirements of powering they may have. Such voltage regulators may be external or integrated in each block.

Specifically, as per the variable attenuator may be active or passive. In case of an active variable attenuator 4, it may be noticed that powering input 4i may be useful to control further components associated thereto, e.g. a microcontroller or logic control circuit. Powering input 4i may be avoided in case of a purely passive attenuator.

The control unit 1 is configured to obtain vehicle state information from the vehicle bus 13. In particular vehicle state information is transmitted on the vehicle bus 13 as a particular type of electric signal; in particular each state of the vehicle state information can be defined to a specific type of electric signal, so as to not to be confused with other states of the vehicle. The vehicle state information relates to a current condition of the electric/hybrid vehicle. Examples of such vehicle state information may be driving speed, acceleration, brake pressure and/or duration, a theft attempt on the vehicle, etc.

In a preferred but non-limiting embodiment, the vehicle state information that is transmitted on the vehicle bus 13 at least comprises: electronic data of instantaneous acceleration a(t) or instantaneous speed v(t) of the vehicle and an electric signal concerning at least an antitheft condition and an AVAS condition. Those electronic data are received via the ECU 200 of the vehicle and/or other external input sources 201, 202 electrically connected to the vehicle bus 13. Those external input sources 201, 202 may be for example and in a non-limiting extent a speed sensor, an acceleration sensor, a volumetric sensor and/or a vibration or door opening sensor.

In particular, it may be appreciated that antitheft condition may take place when external input sources 201, 202 electrically connected to the vehicle bus 13 detect an attempt to steal the vehicle or to tamper the system. Further, it may be appreciated that antitheft condition may take place in case the control unit 1 determines unreadability of vehicle bus 13, that could for instance result from a tampering wherein physical connection to the vehicle bus 13 itself is cut or anyway interrupted.

It may be further appreciated that antitheft condition may take place when a voltage loss from vehicle's battery occurs. Advantageously, control unit 1 may comprise a voltage detector, electrically connected to the vehicle's bus 13 and/or to the vehicle battery, configured to trigger said antitheft condition in case the voltage present on at least a line of the vehicle bus and/or on the vehicle battery drops below a predetermined threshold value.

It may be further appreciated that instantaneous acceleration a(t) or instantaneous speed v(t) of the vehicle may not be calculated from accelerometers installed on the control unit 1, but from external sources. In such a way, lightness of computation burden is kept, thereby resulting in possibility of using a low-cost, energy efficient control unit 1.

If the control unit 1 determines that the vehicle state information is related to an AVAS condition, the control unit may initiate the activation of the AVAS alert system. According to some of the example embodiments, an AVAS condition may be any valid condition related to a driving operation or state of the vehicle, and in particular on vehicle's running parameters, which according to the present disclosure are electrical or electronic parameters like flag signals comprising at least said values of acceleration and/or speed. According to some of the example embodiments, the condition related to the driving operation or state of the vehicle may be evaluated within a predetermined range. According to some of the example embodiments, vehicle station information related to an AVAS condition may further comprise flag signals such as key on/off, pedal position, gear, and/or current time (e.g., in order to reduce noise reduction during certain times of the day).

### Circuitry configuration for a first non-limiting example embodiment.

According to a first embodiment of the present disclosure, represented in figure 1, the controller 100 comprises a control unit 1 having at least a first input electrically connected to the vehicle bus 13 and being provided with an output formed by a plurality of parallel address access lines 1p; the controller 100 comprises a memory 2 whose inputs are fed by said plurality of parallel address access lines 1p. The controller 100 comprises a digital-to-analog converter 3 provided with an input fed by an output line of the memory 2 and in turn being provided with an output feeding a first input of a variable attenuator 4. On the first input, the variable attenuator 4 is configured for receiving an analog replica of a signal to be reproduced. The variable attenuator 4 is further provided with a second input 4c, fed by a control output 1o of the control unit 1. On the second input, the variable attenuator 4 is configured for receiving an attenuation control signal, whose characteristic is calculated at least in said AVAS condition, basing on vehicle state information received from vehicle bus 13, and in particular, in accordance to at least vehicle running parameter electronic data received therefrom.

Variable attenuator 4 may preferably but in a non-limiting extent be a passive variable attenuator; otherwise, with a more complex circuitry, variable attenuator 4 may alternatively be an active component suitable to perform either an actual attenuation of the level of the input signal received, or to at least partially preamplify such an input signal according to the control signal received on the second input 4c.

For the purposes of the present description, the signal generator block previously disclosed comprises the control unit 1, the memory 2, the digital-to-analog converter 3 and the variable attenuator 4, in particular with their specific reciprocal connection disclosed in the previous paragraph.

Specifically, in the first example embodiment shown in figure 1, the controller 100 further comprises an amplifier 5, conceived to operate as an amplifier for AVAS driving conditions; here, the variable attenuator 4 is electrically connected to the amplifier 5; in particular, the variable attenuator 4 has an output electrically connected to a signal input of the amplifier 5. In the first example embodiment shown in figure 1, the first amplifier 5 is a low-voltage high - power amplifier, which receives electric power from the vehicle battery 14. The input of the electric power for the amplifier 5 is schematically represented in figure 1 by the reference number 5i. The amplifier 5 has an output directly connected to the AVAS based acoustic transducer 6.

In the first embodiment, the controller 100 further comprises a driver bridge 7, which behaves as a high-voltage low-power amplifier for the antitheft-based acoustic transducer 6. Preferably, the driver bridge 7 may comprise a set of transistors, either bipolar or preferably MOS, in a known H configuration. The driver bridge 7 comprises: a first voltage input 7c, configured to provide electric power to the bridge for supplying the antitheft-based acoustic transducer 8 with an appropriate voltage signal; a second and signal input, electrically connected - preferably directly, as depicted in figure 1 - with a control output line of the control unit 1; and a third, backup supply input 7s.

In the first embodiment, the controller 100 further comprises a step-up converter 9, provided with an output electrically connected directly with the first voltage input 7c of the driver bridge 7; the step-up converter 9 comprises a first input fed for receiving electric power from a backup battery and preferably, a second input 9i fed for receiving electric power from the vehicle battery 14.

For ensuring the operation of the controller 100 in at least the antitheft condition also in case of a lack of power from the vehicle battery 14, inside the body of the controller 100 may be advantageously present a backup battery 11; in particular, if the antitheft-based acoustic transducer 8 is a piezoelectric transducer, the backup battery 11 may be preferably a lithium coin-shaped battery, very small and light, but indeed providing enough energy capacity to feed the piezoelectric antitheft-based acoustic transducer 8 for a relevant time period. Backup battery may have the anode directly connected to a grounding point 12.

Preferably, in the first embodiment represented in figure 1, in the controller 100 the backup battery 11 may be electrically connected only to the control unit 1, to the driver bridge 7 and to the step-up converter 9; memory 2, digital-to-analog converter 3 and variable attenuator 4, and the first amplifier 5 may be left powered only through the energy coming from the car battery 14. Conveniently, backup battery 11 may be connected to the circuitry via a diode 20, connected in such a way to allow current flow only from the cathode of the battery towards the circuitry of the controller 100, and thereby preventing the reversed current flow.

First example embodiment of the controller 100 has at least a backup powering operative condition, that preferably takes place only when on vehicle bus 13 is present a signal corresponding to antitheft condition, wherein said backup batter 11 leaves the memory 2 unpowered. Such a backup powering operative condition is particularly advantageous for saving energy thanks to the fact that control signal used by control unit 1 to control the driver bridge 7 also contains data relating to an acoustic signal to be reproduced according to a predetermined type of modulation.

In the first example embodiment of the present disclosure, the controller 100 therefore comprises an AVAS based alert system and an antitheft-based alert system. AVAS based alert system comprises: memory 2, digital-to-analog converter 3, variable attenuator 4 and amplifier 5; in other words, AVAS based alert system comprises at least a part of the signal generator block 2, 3, 4. Antitheft-based alert system instead comprises the driver bridge 7, antitheft-based acoustic transducer 8 and may comprise the step-up converter 9.

### Circuitry configuration for a second non-limiting example embodiment.

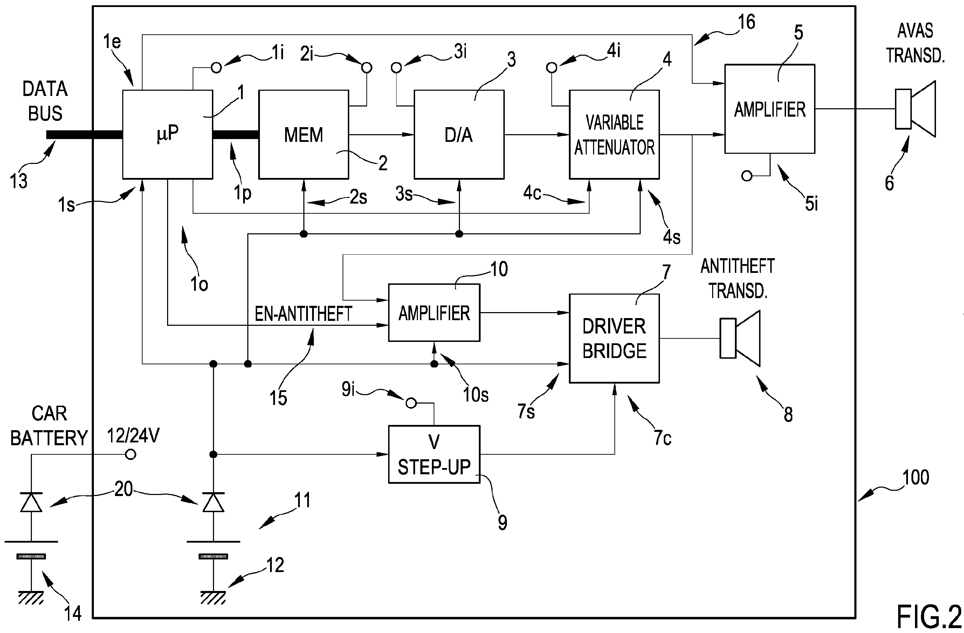

A second and non-limiting embodiment for the controller 100 according to the present disclosure is disclosed in figure 2. In the second embodiment, controller 100 comprises a control unit 1 having at least a first input electrically connected to the vehicle bus 13 and being provided with an output formed by a plurality of parallel address access lines 1p; the controller 100 comprises a memory 2 whose inputs are fed by said plurality of parallel address access lines 1p. The controller 100 comprises a digital-to-analog converter 3 provided with an input fed by an output line of the memory 2 and in turn being provided with an output feeding a first input of a variable attenuator 4. On the first input, the variable attenuator 4 is configured for receiving an analog replica of a signal to be reproduced. The variable attenuator 4 is further provided with a second input 4c, fed by a control output 1o of the control unit 1. On the second input, the variable attenuator 4 is configured for receiving an attenuation control signal, whose characteristic is calculated at least in said AVAS condition, basing on vehicle state information received from vehicle bus 13, and in particular, in accordance to at least vehicle running parameter electronic data received therefrom.

Variable attenuator 4 may preferably but in a non-limiting extent be a passive variable attenuator; otherwise, with a more complex circuitry, variable attenuator 4 could be an active component suitable to perform either an actual attenuation of the level of the input signal received, or to at least partially preamplify such an input signal according to the control signal received on the second input 4c.

Specifically, in the second example embodiment shown in figure 2, the controller 100 further comprises an amplifier 5, conceived to operate as an amplifier for AVAS driving conditions; here, the variable attenuator 4 is electrically connected to the amplifier 5; in particular, the variable attenuator 4 has an output electrically connected to a signal input of the amplifier 5. In the second example embodiment shown in figure 2, the first amplifier 5 is a low-voltage, high - power amplifier, which receives electric power from the vehicle battery 14. The input of the electric power for the first amplifier 5 is schematically represented in figure 1 by the reference number 5i. The amplifier 5 has an output directly connected to the AVAS based acoustic transducer 6.

Differently from the first example embodiment, in the second example embodiment the amplifier 5 further comprises an enabling input electrically connected to an EN_AVAS line in turn connected to a first enabling output 1e for the AVAS condition on the control unit 1. On the enabling input, the amplifier 5 receives a control signal which provides either the enabling or the disabling of the operation of the amplifier; in other words, the amplifier 5 operation can be selectively disabled or activated directly by the control unit 1 through a specific control signal. EN_AVAS line may be a line carrying a single bit signal.

In addition, the second example embodiment of the controller 100 further comprises a further or antitheft amplifier 10 for the antitheft-based acoustic transducer 8. The antitheft amplifier 10, which is a low-voltage, low power amplifier, comprises a first input electrically connected to the output of the variable attenuator 4 and a second enabling input electrically connected to an EN_antitheft line in turn connected to a second enabling output for the antitheft condition on the control unit 1. On the enabling input, the antitheft amplifier 10 receives a signal which provides either the enablement or the disabling of the operation of the amplifier; in other words, the amplifier 5 and the antitheft amplifier 10 can be selectively, and in particular alternatively, disabled or activated directly by the control unit 1 through a specific control signal. EN_antitheft line may be a line carrying a single bit signal.

In the second embodiment, the controller 100 further comprises a driver bridge 7, which behaves as a high-voltage low-power amplifier for the antitheft-based acoustic transducer 6. Preferably, the driver bridge 7 may comprise a set of transistors, either bipolar or preferably MOS, in a known H configuration. The driver bridge 7 comprises: a first voltage input 7c, configured to provide electric power to the bridge for supplying the antitheft-based acoustic transducer 8 with an appropriate voltage signal; a second and signal input, electrically connected - preferably directly, as depicted in figure 2 - with the output of the second amplifier; a third, backup supply input 7s.

In the second embodiment, the power requested to properly feed the antitheft-based acoustic transducer 8 may be provided by the driver bridge 7, thereby allowing to have a small sized antitheft amplifier 10 that advantageously may operate actually as a low-voltage preamplifier.

In the second embodiment, the controller 100 further comprises a step-up converter 9, provided with an output electrically connected directly with the first voltage input 7c of the driver bridge 7; the step-up converter 9 comprises a first input fed for receiving electric power from a backup battery and preferably, a second input 9i fed for receiving electric power from the vehicle battery 14.

For ensuring the operation of the controller 100 in at least the antitheft condition also in case of a lack of power from the vehicle battery 14, inside the body of the controller 100 may be advantageously present a backup battery 11; in particular, if the antitheft-based acoustic transducer 8 is a piezoelectric transducer, the backup battery 11 may be preferably a lithium coin-shaped battery, very small and light, but indeed providing enough energy capacity to feed the piezoelectric antitheft-based acoustic transducer 8 for a relevant time period. Backup battery may have the anode directly connected to a grounding point 12.

Preferably, in the second embodiment represented in figure 2, in the controller 100 the backup battery 11 may be electrically connected to the control unit 1, to the memory 2, to the digital-to-analog converter 3, to the variable attenuator 4, to the antitheft amplifier 10, to the driver bridge 7 and to the step-up converter 9; the control unit 1, the memory 2, the digital-to-analog converter 3, the variable attenuator 4, the antitheft amplifier 10, the driver bridge 7 and the step-up converter 9 may be powered by the backup battery 11 through connection with respective backup inputs 1s, 2s, 3s, 4s, 10s, 7s. The first amplifier 5 may be left powered only through the energy coming from the car battery 14.

Conveniently, backup battery 11 may be connected to the circuitry via a diode 20, connected in such a way to allow current flow only from the cathode of the battery towards the circuitry of the controller 100, and thereby preventing the reversed current flow.

Second example embodiment of the controller 100 has at least a backup powering operative condition, that preferably takes place only when on vehicle bus 13 is present a signal corresponding to antitheft condition, wherein said backup batter 11 leaves the entire sound generating block 1, 2, 3, 4 powered. Such a backup powering operative condition is particularly requested due to the fact that control signal used by control unit 1 to control the driver bridge 7, differently than the first example embodiment, does not contain data relating to an acoustic signal to be reproduced according to a predetermined type of modulation.

In the second example embodiment of the present disclosure, the controller 100 therefore comprises an AVAS based alert system and an antitheft-based alert system. AVAS based alert system comprises: memory 2, digital-to-analog converter 3, variable attenuator 4 and amplifier 5; in other words, AVAS based alert system comprises at least a part of the signal generator block 2, 3, 4. Antitheft-based alert system instead comprises the memory 2, digital-to-analog converter 3, variable attenuator 4, the antitheft amplifier 10, the driver bridge 7, antitheft-based acoustic transducer 8 and may comprise the step-up converter 9. In other words, in the second example embodiment of the present disclosure, circuitry is at least partially shared by AVAS and antitheft-based alert systems.

### Circuitry configuration for a third non-limiting example embodiment.

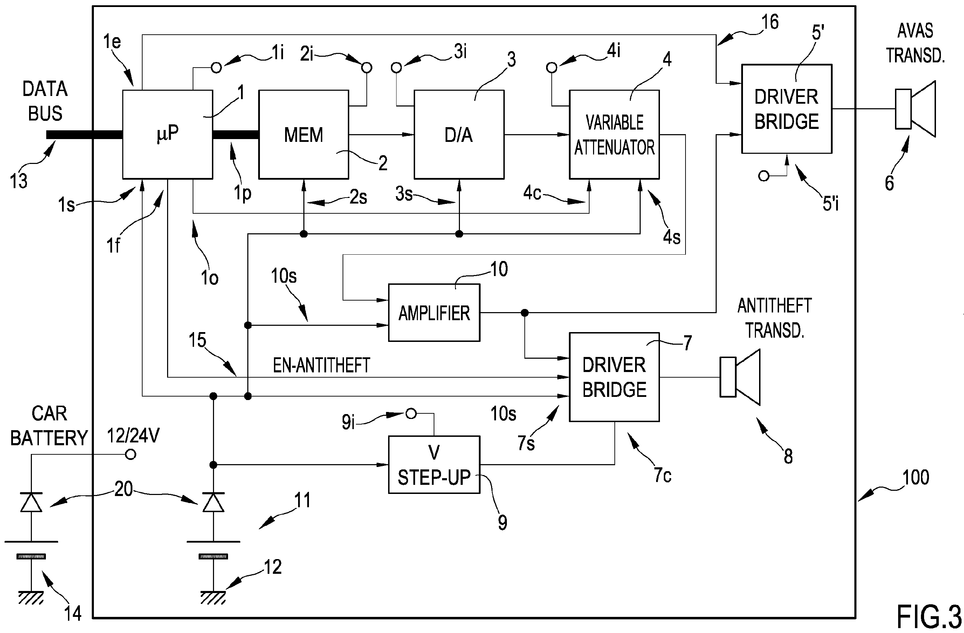

A third and non-limiting embodiment for the controller 100 according to the present disclosure is disclosed in figure 3. In the second embodiment, controller 100 comprises a control unit 1 having at least a first input electrically connected to the vehicle bus 13 and being provided with an output formed by a plurality of parallel address access lines 1p; the controller 100 comprises a memory 2 whose inputs are fed by said plurality of parallel address access lines 1p. The controller 100 comprises a digital-to-analog converter 3 provided with an input fed by an output line of the memory 2 and in turn being provided with an output feeding a first input of a variable attenuator 4. On the first input, the variable attenuator 4 is configured for receiving an analog replica of a signal to be reproduced. The variable attenuator 4 is further provided with a second input 4c, fed by a control output 1o of the control unit 1. On the second input, the variable attenuator 4 is configured for receiving an attenuation control signal, whose characteristic is calculated at least in said AVAS condition, basing on vehicle state information received from vehicle bus 13, and in particular, in accordance to at least vehicle running parameter electronic data received therefrom.

Variable attenuator 4 may preferably but in a non-limiting extent be a passive variable attenuator; otherwise, with a more complex circuitry, variable attenuator 4 could be an active component suitable to perform either an actual attenuation of the level of the input signal received, or to at least partially preamplify such an input signal according to the control signal received on the second input 4c.

Specifically, in the third example embodiment shown in figure 3, the controller 100 further comprises a voltage or driver bridge 5', hereinafter also called first driver bridge for AVAS alert subsystem, conceived to operate as a secondary amplifier for AVAS driving conditions; in the third example embodiment shown in figure 3, the driver bridge 5' is a low-voltage high - power amplifier, which receives electric power from the vehicle battery 14. The input of the electric power for the first amplifier 5 is schematically represented in figure 3 by the reference number 5i. The first bridge 5' has an output directly connected to the AVAS based acoustic transducer 6.

As for the second example embodiment, in the third example embodiment the first driver bridge 5' further comprises an enabling input electrically connected to an EN_AVAS line in turn connected to a first enabling output 1e for the AVAS condition on the control unit 1. On the enabling input, the first driver bridge 5' receives a signal which provides either the enablement or the disabling of the operation of the amplifier; in other words, the first driver bridge 5' operation can be selectively disabled or activated directly by the control unit 1 through a specific control signal. EN_AVAS line may be a line carrying a single bit signal.

In addition, the third example embodiment of the controller 100 further comprises an amplifier 10 for the AVAS based acoustic transducer 6 and for antitheft-based acoustic transducer 8. The amplifier 10 comprises a first input electrically connected to the output of the variable attenuator 4 and an output that feeds the first driver bridge 5'.

In the third embodiment, the controller 100 further comprises a second driver bridge 7, which behaves as a high-voltage low-power amplifier for the antitheft-based acoustic transducer 6, which in turn is fed by the second amplifier 10. In other words, differently from the first and second example embodiments, the amplifier 10 is an amplifier which is shared in common by both for operating in case of an AVAS condition takes place as well as in case an antitheft condition takes place. Therefore, the amplifier 10 comprises an output electrically connected to both the signal input of the first driver bridge 5' and to the signal input of the second driver bridge 7. Using a single amplifier for managing both the antitheft and AVAS conditions allows for saving the space and cost deriving from installing dedicated amplifiers configured each one for managing the respective AVAS or antitheft condition; in particular, Applicant considers that the use of a chain of a shared amplifier followed by a voltage and a driver bridge, creates a chain of preamplification and final amplification which is very flexible in terms of operation: the preamplification of signals for AVAS and antitheft condition can be managed by a small an low consuming amplifier, and the final amplification and adaptation of acoustic signals for both the antitheft-based acoustic transducer 8 and AVAS based acoustic transducer 6 is managed by specific stages - which are precisely the second driver bridge 7 and respectively the first driver bridge 5'.

Preferably, the second driver bridge 7 may comprise a set of transistors, either bipolar or preferably MOS, in a known H configuration. The second driver bridge 7 comprises: a first voltage input 7c, configured to provide electric power to the bridge for supplying the antitheft-based acoustic transducer 8 with an appropriate voltage signal; a second and signal input, electrically connected - preferably directly, as depicted in figure 3 - with the output of the amplifier 10; a third, backup supply input 7s.

In the third embodiment, second driver bridge 7 may comprise fourth input or enabling input electrically connected to an EN_antitheft line in turn connected to a second enabling output 1f for the antitheft condition on the control unit 1. On the enabling input, the second driver bridge 7 receives a signal which provides either the enablement or the disabling of the operation of the bride; in other words, both the first driver bridge 5' and second driver bridge 7 operation can be selectively, and in particular alternatively, disabled or activated directly by the control unit 1 through a specific control signal. EN_antitheft line may be a line carrying a single bit signal.

In the third embodiment, the controller 100 further comprises a step-up converter 9, provided with an output electrically connected directly with the first voltage input 7c of the second driver bridge 7; the step-up converter 9 comprises a first input fed for receiving electric power from a backup battery and preferably, a second input 9i fed for receiving electric power from the vehicle battery 14.

For ensuring the operation of the controller 100 in at least the antitheft condition also in case of a lack of power from the vehicle battery 14, inside the body of the controller 100 may be advantageously present a backup battery 11; in particular, if the antitheft-based acoustic transducer 8 is a piezoelectric transducer, the backup battery 11 may be preferably a lithium coin-shaped battery, very small and light, but indeed providing enough energy capacity to feed the piezoelectric antitheft-based acoustic transducer 8 for a relevant time period. Backup battery may have the anode directly connected to a grounding point 12.

Preferably, in the third embodiment represented in figure 3, in the controller 100 the backup battery 11 may be electrically connected to the control unit 1, to the memory 2, to the digital-to-analog converter 3, to the variable attenuator 4, to the amplifier 10, to the second driver bridge 7 and to the step-up converter 9; the control unit 1, the memory 2, the digital-to-analog converter 3, the variable attenuator 4, the second amplifier 10, the second driver bridge 7 and the step-up converter 9 may be powered by the backup battery 11 through connection with respective backup powering inputs 1s, 2s, 3s, 4s, 10s, 7s. The first driver bridge 5' may be left powered only through the energy coming from the car battery 14.

Conveniently, backup battery 11 may be connected to the circuitry via a diode 20, connected in such a way to allow current flow only from the cathode of the battery towards the circuitry of the controller 100, and thereby preventing the reversed current flow.

Third example embodiment of the controller 100 has at least a backup powering operative condition, that preferably takes place only when on vehicle bus 13 is present a signal corresponding to antitheft condition, wherein said backup batter 11 leaves the entire sound generating block 2, 3, 4 powered. Such a backup powering operative condition is particularly requested due to the fact that control signal used by control unit 1 to control the second driver bridge 7, differently than the first example embodiment, does not contain data relating to an acoustic signal to be reproduced according to a predetermined type of modulation, but in contrast is a purely enabling signal.

In the third example embodiment of the present disclosure, the controller 100 therefore comprises an AVAS based alert system and an antitheft-based alert system. AVAS based alert system comprises: memory 2, digital-to-analog converter 3, variable attenuator 4, the amplifier 10 and the first driver bridge 5'; in other words, AVAS based alert system comprises at least a part of the signal generator block 2, 3, 4. Antitheft-based alert system instead comprises the memory 2, digital-to-analog converter 3, variable attenuator 4, the amplifier 10, the driver bridge 7, antitheft-based acoustic transducer 8 and may comprise the step-up converter 9. In other words, in the third example embodiment of the present disclosure, from control unit 1 up to amplifier 10, circuitry is shared by AVAS and antitheft-based alert systems.

### Description of operation of the circuits.

The controller 100 according to the example embodiments of the present disclosure is specifically configured to perform - when in use - a method for providing an acoustic alerting system for an electric/hybrid vehicle, the method comprising:
- electronically processing vehicle state information received from a vehicle bus 13;
- if the vehicle state information is related to an antitheft condition, generating, via a control unit 1, a control signal and sending the control signal to a first output in communication with a first acoustic transducer 8 for activation of an antitheft alert; and
- if the vehicle state information is related to an Acoustic Vehicle Alerting System, AVAS, condition, generating, via the control unit 1, an acoustic signal, based on the vehicle state information and sending the acoustic signal to a second output in communication with a second acoustic transducer (6) for activation of an AVAS alert.

According to this general formulation, the first acoustic transducer is the antitheft-based acoustic transducer 8, while the second acoustic transducer is the AVAS based acoustic transducer 6.

Furthermore, considering that according to the previously described example embodiment the AVAS based acoustic transducer is arranged outside the body of the controller 100, according to the previous general formulation, the second output may be:
- when considering the first example embodiment or the second example embodiment, the output of the amplifier 5 and more in general the output of the signal generation block;
- when considering the third example embodiment, either the output of the signal generation block or the output of the amplifier 10 or either the output of the driver bridge 5'.

According to the previous general formulation, the first output is:
- when considering the first example embodiment, the control output of the control unit 1 or the output of the driver bridge 7 directly connected with the output of the antitheft-based acoustic transducer;
- when considering the second example embodiment, the control output of the control unit 1, or the output of the antitheft amplifier 10 or the output of the driver bridge 7 directly connected with the output of the antitheft-based acoustic transducer;
- when considering the third example embodiment, the control output of the control unit 1, or the output of the amplifier 10 - commonly shared by AVAS and antitheft systems- or the output of the driver bridge 7.

In the activation of the AVAS alert system, the control unit 1 sends signals to an output associated with the AVAS alert system. Specifically, the control unit 1 may access a memory unit 2.

According to a preferred operative embodiment, the memory 2 for both the first, the second and the third example embodiment previously disclosed, the memory 2 may be a parallel flash memory unit.

The memory 2 may comprise a storage of sounds featuring different tones in a form of an acoustic file comprising a plurality of preferentially juxtaposed samples. Each tone may be associated with a respective AVAS driving condition. Thus, based on the condition determined from the vehicle state information, a specific sound and tone combination may be selected from the memory 2 more in particular through variating the reproduction speed of the file that results in a frequency shift of the acoustic signal so played back, more in detail resulting in a rigid frequency shifting.

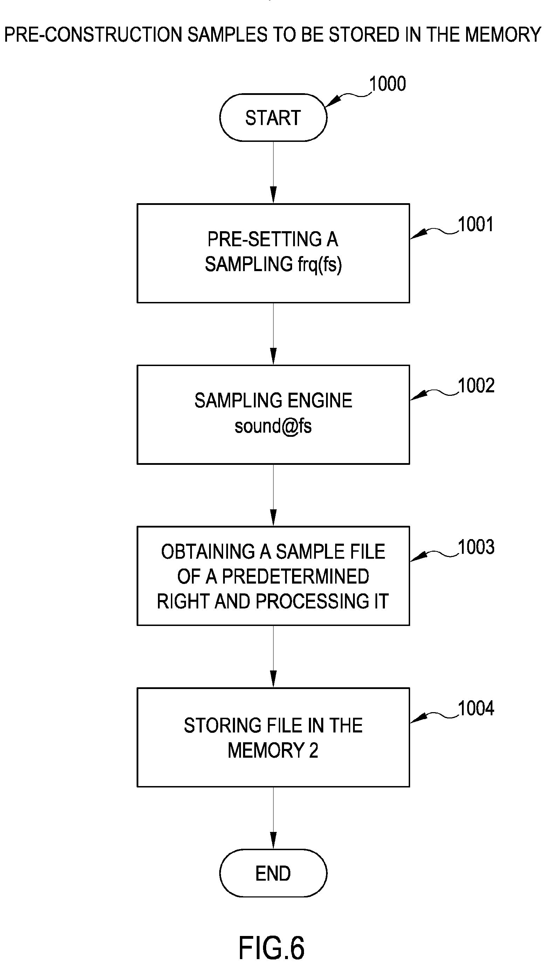

Figure 6 shows a flow chart of how the tones are stored in the memory 2. In particular, memory 2 stores at least one and preferably but in a non-limiting extent a plurality of sounds, each one may be, and preferably is, in a form of a file comprising a plurality of samples to be sequentially played; each sample corresponds to a numeric value defined over a predetermined number of bits. For example, the file can contain 10000 samples each one sampled over 16bits. In case the memory is a parallel flash memory unit, each sample of the file can be read over a specific line of the parallel address access lines 1p.

Before storing the file in the memory, the procedure (block 1000) for creating the file starts from a first step (block 1001) wherein a sampling frequency fs for recording a sound is predefined by the user; as a non limiting example, sampling frequency fs may be 12 kHz. A subsequent step (block 1002) involves recording - through recording device of a known type - a sound, in particular an engine sound. Such a recording is performed by sampling the engine sound by means of at least one microphone, for a predetermined time - that may be for instance 2 seconds - at the predetermined sampling frequency fs over the predetermined number of bits. Preferably, the engine should be kept at a substantially constant rotation speed while performing the sampling.

The result of the step is obtaining (block 1003) a sample file of a predetermined length that is further processed by means of an audio processor program that may be run on an electronic computer. Applicant has noticed that since the sample file will in use be played in loop as long as the AVAS condition rests active, the first and last sample thereof should be adapted in order to avoid glitches in the reproduction. In fact, said glitches would result in an audible beating that is normally not present in the engine sound. Therefore, the sample file undergoes an electronic data processing for which at least the first and the last sample thereof are adapted in terms at least of amplitude, so as to meet a predefined requirement. Such a requirement could involve not only a compatibility of amplitude between the first and the last sample, but may further require adaptation of the first and also second derivative of at least the first sample and the last sample of the file, and preferably, of a first subset of samples of the file and a last subset of samples of the file, wherein said first and last subset of samples of the file comprise respectively the first and the last sample. Once such an electronic processing is terminated, the so adapted sample file is stored (block 1004) in the memory 2.

A feature that is shared in common by the first, second and third example embodiment of the controller 100 is that the signal generator block 2, 3 ,4, configured to generate an appropriate acoustic signal with a constant envelope or with an envelope that varies over time depending whether it has to control an antitheft-based acoustic transducer or an AVAS based acoustic transducer, when generating the acoustic signal for the AVAS based acoustic transducer, i.e. when the control unit 1 receives an AVAS condition signal from the vehicle bus 13, it plays the sound files stored in the memory 2 in a loop, but adapting the frequency with which the memory is read, i.e. each sample is read, according to driving conditions of the vehicle which are acquired from the vehicle bus 13.

It should therefore be appreciated that the most sophisticated AVAS based alert systems make use of: a Digital Signal Processor (DSP), a memory where associated AVAS sounds may be stored, an amplifier and a microcontroller to manage the AVAS system and establish dialog with the vehicle. In particular, it should be noticed that generating an acoustic signal replicating a vehicle motor sound through a DSP and without pre-sampled sounds involves a huge computation cost, especially if the resulting sound shall adapt substantially in real time the behaviour of the vehicle. This is especially due to the fact that engine sound may have a significantly large spectrum occupation within the audible tones. The less sophisticated systems use only a microcontroller provided with a large memory to reflect the number and/or duration of the stored acoustic samples; this shall feature a high speed of operation to be able to manage the playing of the sound and all the other necessary activities (e.g., establishing communication with the vehicle).

In contrast, embodiments herein disclosed, include a separate and dedicated memory unit, actually the memory 2, for storing AVAS related sounds. With a parallel readable memory 2, it is conceived a controller 100 whose sound processing involves a lower level of complexity; in particular such a lower level of complexity may be provided as the microprocessor or control unit 1 no longer needs to process such acoustic samples but may instead retrieve the AVAS sounds from the dedicated parallel memory unit by updating (sequentially reading) the addresses, thereby reducing the processing requirements of the control unit. The speed of such updating (scanning speed) can be varied with the purpose to change the frequency position, in particular by means of a rigid spectrum shifting of the sound, in connection with the vehicle state information, and in particular in connection with the vehicle's running parameters..

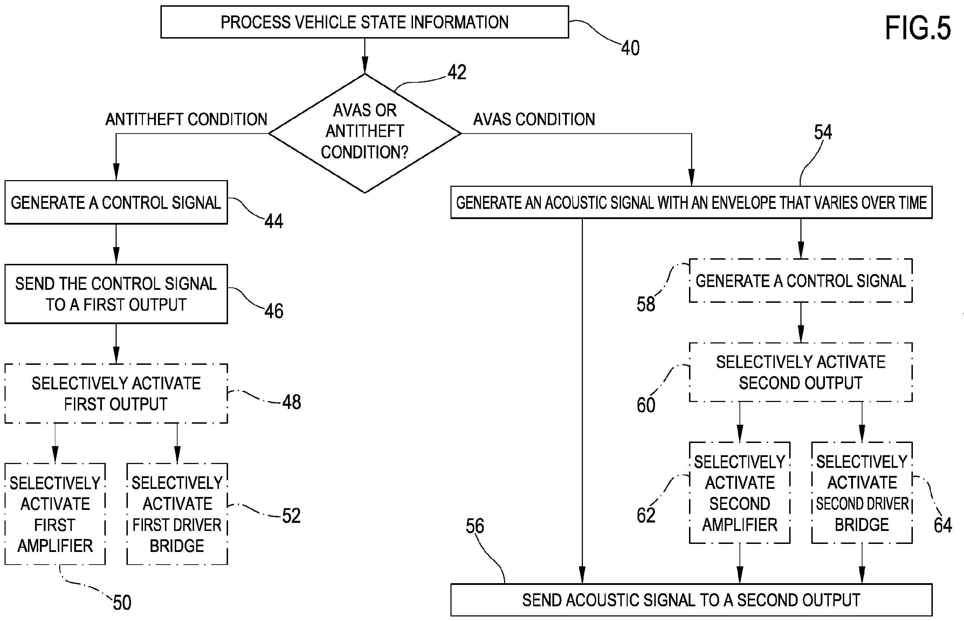

More in detail, as disclosed in figure as schematically represented in figure 5, when through the vehicle bus 13 a signal corresponding to an AVAS condition takes place (block 42, right exit), the control unit 1 receiving said signal is configured for automatically cause a generation of an acoustic signal, that may have an envelope that varies over time (block 54).

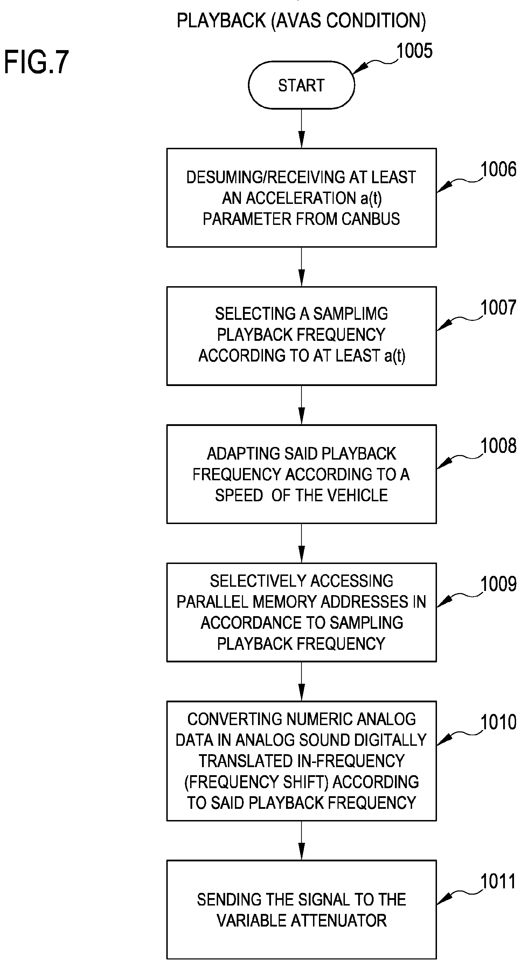

The step of generation of a control signal (block 58) and generation of the acoustic signal (block 54) is describe more in detail in flow diagram of figure 7. In particular thanks to the type of information the signal corresponding to AVAS condition has, the control unit 1 may be automatically configured for calculating or receiving at least an acceleration a(t) parameter from vehicle bus 13 (block 1006); such a calculation of reception may be performed as follows: if the vehicle bus 13 transports the signal corresponding to the instantaneous speed of a vehicle v(t), acceleration a(t), which is preferably an instantaneous value of acceleration, is electronically calculated by taking two subsequent values of instantaneous speed v(t) and electronically differentiating them over the time; in contrast, if the vehicle bus 13 carries a signal directly comprising instantaneous acceleration a(t), control unit 1 does no longer need to perform such an electronic differentiation.

According to the instantaneous value of acceleration a(t), control unit 1 is automatically configured to perform a selection or adaptation (block 1008) of a playback frequency f which may be the frequency of reading each of the parallel address lines of memory 2. In particular the selection of a playback frequency f may be selected:
- in accordance to only the value of instantaneous speed v(t); or
- in accordance to the value of instantaneous acceleration a(t) and in accordance to the instantaneous value of speed v(t) of the vehicle; in such a latter case, control unit 1 may advantageously store two different weights w1, w2 respectively electronically associated to the instantaneous acceleration a(t) and instantaneous speed v(t), and may be configured to select a playback frequency f in accordance to a predefined algorithm or calculation equation wherein playback frequency f is a function of instantaneous acceleration a(t) and instantaneous speed v(t), each one multiplied by respective weight w1, w2. In detail, weight w1 for acceleration is smaller than weight w2 for speed.

It may be appreciated that the relation linking playback frequency with the instantaneous speed is direct, i.e. playback frequency f may increase with the increase of instantaneous speed v(t). In a preferred but non-limiting embodiment, the relation may be linear.

Values of instantaneous acceleration and/or speed a(t), v(t) are time-variating values that may be updated on a predetermined sampling time, that for instance may be of some ms. Thereby, choice or adaptation of playback frequency f performed by control unit 1 may be an operation which is automatically repeated after a predetermined amount of time lapsed from the last and previous choice or adaptation; preferably, but in a non-limiting extent, playback may be performed with the same frequency used to update the instantaneous acceleration and/or speed a(t), v(t) values.

Once the playback frequency is determined, with such a playback frequency driver the speed which control unit 1 uses to access memory 2 and therefore to select the specific sample of the file therein stored. Such a frequency adaptation or choice could result in a difference with respect to the original sampling frequency fs that was used to sample the acoustic file stored in memory 2. By electronically accessing samples stored in memory 2 (block 1009) with a playback frequency f differing from the original sampling frequency fs, results in a rigid shifting of the spectrum - i.e. of each frequency of the spectrum - the samples have. If playback frequency f is higher than original sampling frequency fs (f>fs), sound stored in memory 2 will be played more acute; otherwise, in case playback frequency f is lower than original sampling frequency fs (f<fs), sound stored in memory 2 will be played less acute than in origin.

Applicant particularly underlines that the playback steps disclosed in previous paragraphs, in terms of computation effort are far less complex than changing the musical pitch of a sample. In that latter case, the control unit should implement an onerous DSP which, through actual change of pitch, does not simply rigidly translates the spectrum of the sampled sound, but searches adaptively fundamentals of the sound to be translated, and selectively translates in frequency only some of the frequencies of the spectrum the sampled file has, while leaving unaltered some others. With the playback steps disclosed in previous paragraphs, each sample shall not be specifically processed by the control unit 2 but can be sent to digital-to-analog converter 3, for a step of conversion from numeric domain to analog domain of the sample being shifted in frequency (block 1010).

Once the associated sound has been chosen, the acoustic data may be sent to a digital-to-analogue converter 3, which performs said conversion from numeric to analog domain, and thereafter to the variable attenuator 4 (block 1011).

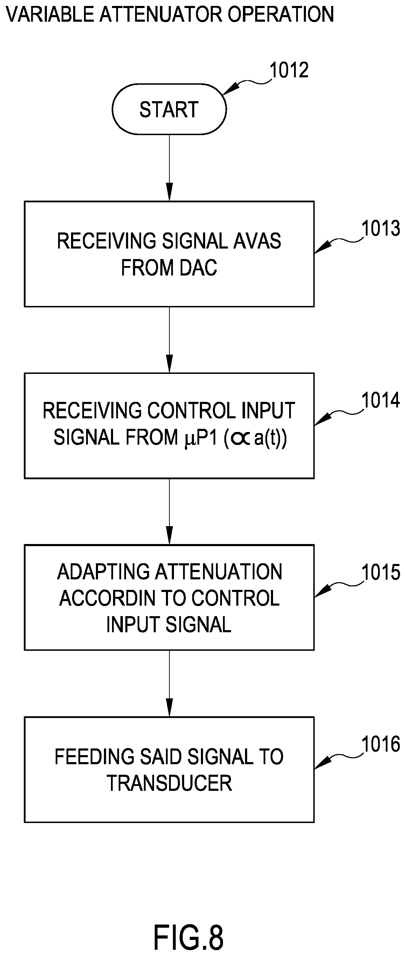

The variable attenuator 4 adjusts the sound level of the acoustic signal to reflect the vehicle's running parameters. Operation of variable attenuator 4 is disclosed in flow diagram of figure 8. The variable attenuator 4 is further provided with a second input 4c, fed by the control output 1o of the control unit 1 on which an attenuation control signal, whose characteristic is calculated upon AVAS condition; such a characteristic may be at least depending on the instantaneous acceleration a(t). More in detail, the greater the instantaneous acceleration a(t) is, the higher the volume of the sound at the output of the variable attenuator 4 will be. Optionally, but preferably, such a characteristic may be further depending on the instantaneous speed v(t) of the vehicle. In other words, upon receiving the AVAS signal transformed in analog domain by virtue of digital-to-analog converter (block 1013), through the simultaneous reception of the attenuation control signal from control unit 1 (block 1014), variable attenuator 4 automatically performs a step of time-variating attenuation of signal received on its input to produce a variably attenuated output AVAS acoustic signal (bloc 1015) to be further fed (block 1016) to AVAS based acoustic transducer 6.The AVAS acoustic signal produced on the output of the variable attenuator 4 before being transduced shall be amplified.

When using the first example embodiment of the present disclosure, such a signal may thereafter be sent to the amplifier 5 to increase the power level of the signal according to the associated AVAS condition. According to some of the example embodiments, the amplifier 5 of Figure 1 may be high power D class amplifier. After the signal has been provided to the output of the amplifier 5, it exits the controller 100 to be sent to the AVAS based acoustic transducer 5 which is installed remotely from the position of the controller 100. Once the amplified signal is sent to the AVAS acoustic transducer 6, the AVAS alert is activated. It should be appreciated that while a single AVAS transducer is provided in the example embodiments shown in figures 1-3, any number of AVAS transducers may be employed.

In the first example embodiment of figure 1, if the control unit determines that the vehicle state information is related to an antitheft condition, the control unit 1 may initiate the activation of the antitheft alarm system. Such steps of determination and activation are depicted in the flow diagram of figure 5 in blocks 42 and 44. According to some of the example embodiments, an antitheft condition may be an attempted break in of the vehicle, an attempted tampering of a power system of the vehicle, a detected intrusion, a breakage of windows, or a vehicle lifting or towing. It should be appreciated that an antitheft condition may also result in a determination that the vehicle/data bus is unreadable. According to some of the example embodiments, the vehicle state information related to an antitheft condition may be flag signals such as key on/of, system arm/disarm, and/or intrusion detected by on-board sensors (e.g., triggering the sound alarm). The control unit 1 may be in particular configured to perform a sabotage warning. In such a warning, that could be advantageously performed automatically throughout the entire operation of the controller 100 independently both in case of AVAS condition and antitheft condition, if electric power from the vehicle's battery 14 is cut, control unit 1 can be configured to activate the aforementioned antitheft condition.

According to some of the example embodiments, once the antitheft condition has been identified, the control unit 1 may send a control signal to an output associated with the antitheft alarm system.

When circuit according to the first example embodiment of figure 1 is used, the control unit 1 may generate and send directly a control signal to a driver bridge 7. In the example provided by Figure 1, the driver bridge 7 is an H-bridge and the control signal is modulated according a predetermined type of modulation; more in detail, said control signal is a square wave signal with a constant amplitude, in particular a PWM signal. In other words, in the first example embodiment, control signal generated by control unit 1 is a signal that also carries information about the acoustic signal to be amplified by driver bridge.

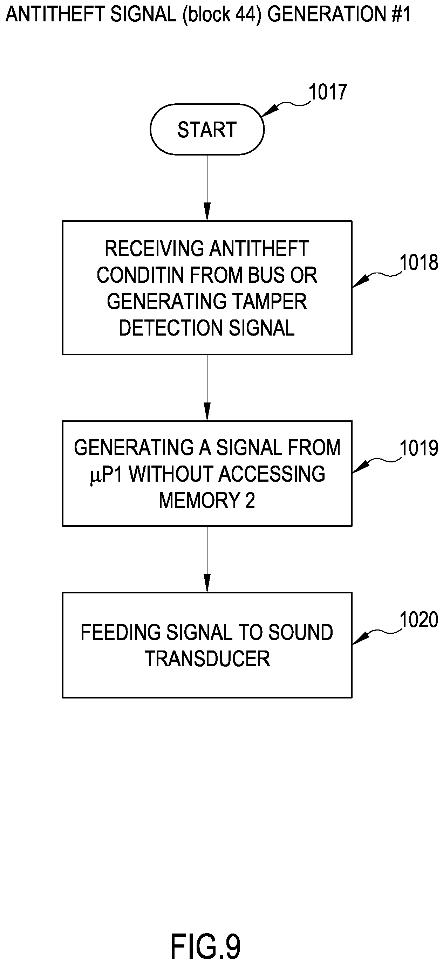

In such a case, and according to the further flow diagram disclosed in figure 9, in case antitheft condition has been identified (block 1018) control unit 1 may advantageously generate the PWM signal without involving any of the memory 2, digital-to-analog converter 3 or variable attenuator 4 stages. Thanks to this aspect, those stages can be left unpowered, or lose power, without affecting the operation of the controller 100 when in antitheft condition. Battery lasting is advantageously kept as high as possible, provided that the least possible number of stages in the electronic circuitry of controller 100 are fed.

As already mentioned, the antitheft acoustic transducer may be a piezoelectric transducer. According to such example embodiments, to control the piezoelectric-type acoustic transducer, a high voltage supply may be used (e.g., 30V or more). Thus, the step-up voltage unit 9, may be used to provide such voltage values.

Thus, as illustrated in Figure 1, the functions of both AVAS for electric/hybrid vehicles (including the backing sound and the horn sound) and self-powered antitheft alarm siren are integrated within one controller 100 and in particular with the electronic control performed by a single control unit 1, saving modules and components.

According to some of the example embodiments, one of the sounds stored in the memory unit 2 may be a vehicle horn sound. Therefore, the control unit 1 may further be configured to control the operation of three sound systems. Namely, the AVAS system, the antitheft system and a general car horn. Thus, the control unit 1 may be able to switch between the two/three possible operation modes (AVAS, antitheft alarm and siren/horn) without any further particular steps.

It should further be appreciated that the AVAS based alarm transducer may also be configured to produce an antitheft alarm sound in the case of an operational failure of the first output. Specifically, according to some of the example embodiments, one of the sounds stored in the memory unit 2 may be a sound associated with an antitheft alarm.

This is the case of the second and third example embodiments of the present disclosure, shown in figures 2 and 3. Operation thereof, specifically in case an antitheft condition takes place, may differ from operation of the first embodiment of the present disclosure at least because the generation of the antitheft signal involves the cooperation of control unit 1 and memory 2, and more in detail of the entire chain provided by signal generator block 2, 3 ,4.

In contrast to the first example embodiment shown in Figure 1, in the example embodiments illustrated in Figure 2 and in figure 3, the control unit 1 will access the memory unit 2 regardless of whether the vehicle state information is associated with the antitheft or the AVAS condition. In such embodiments, the signal required to activate the antitheft transducer may be provided by the signal generator block, which may comprise the memory unit 2, the digital-to-analogue converter 3 and the variable attenuator 4. Both acoustic signals for both AVAS condition and antitheft condition are both produced from accessing memory unit 2, wherein samples of such signals are stored.

The control unit 1 may further generate two control signals depending on whether the vehicle state information is associated with an antitheft or an AVAS condition. If the vehicle information is associated with an antitheft condition, the control unit 1 may send a control signal to the first output in order to drive the antitheft acoustic transducer.

Such two control signals are selectively activated to selectively enable the AVAS amplifier 5 or the antitheft amplifier 10.

When antitheft condition is detected, the control unit 1 sends the control signal 'EN_antitheft' to the antitheft amplifier 10, resulting in the activation of the driver bridge whose output drives the antitheft transducer.

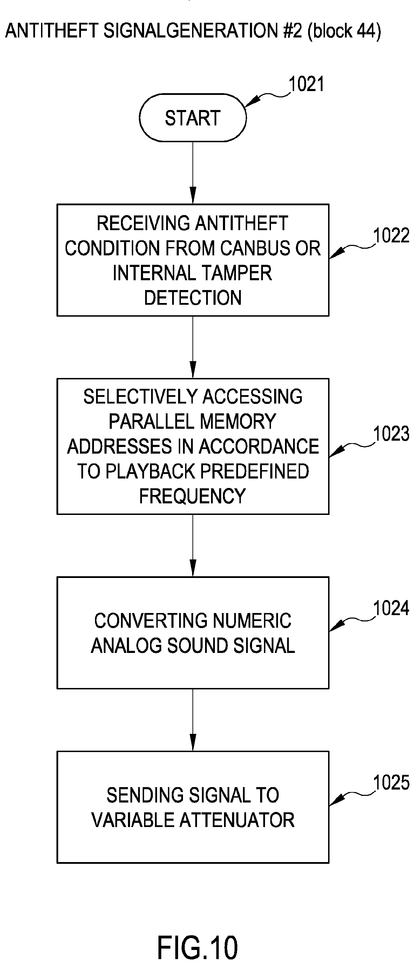

As schematically represented in figure 10, upon the identification of an antitheft condition (block 1022), the control unit 1 may access the memory unit 4 to receive the signal associated with the antitheft alert. Signal is created through the selective access to the parallel input lines of memory 2 at the predefined playback frequency f. Differently than the AVAS condition, when in antitheft condition the control unit 1 does not adapt playback frequency according to instantaneous speed or acceleration for the vehicle. Then the samples are sent to digital-to-analogue converter 3 (block 1024) for performing a numeric-to-analogue conversion and then the so created signal is sent to the variable attenuator 4 (block 1025). The signal generated on the output of the variable attenuator block 4 is sent to the antitheft amplifier 10. The control signal and the signal amplified to the amplifier 10 is then sent to the driver bridge 7 and finally, to the antitheft transducer 8.

If an AVAS condition is identified in the vehicle state information, the control unit 1 operates in a similar manner as described for the first example embodiment of Figure 1. Reader can therefore consider the operation of the signal generator block 2, 3 ,4 of the first example embodiment be still valid also for the second example embodiment herewith treated.

In addition to the operations performed for the first example embodiment, in the second example embodiment here described, the control unit 1 may generate a control signal 'EN_AVAS' to the first amplifier 5, resulting in the activation of the second output and the AVAS based acoustic transducer 6..

As per the operation of the third example embodiment circuit, as it takes place for the second example embodiment, memory 2 is accessed for playing back both signals for AVAS condition and antitheft condition. Reader is invited to consider relevant previous passages to understand the operation in those cases.

Differently than the second example embodiment, the third example embodiment disclosed in figure 3 uses a single amplifier 10 shared for both AVAS and antitheft condition. Therefore, once the signal corresponding either to the sound for AVAS condition or the sound for antitheft condition are produced at the output of the signal generator block 2, 3 ,4, and in particular at the output of the variable attenuator 4, they are sent - in both conditions, i.e. independently of which between the AVAS or antitheft condition takes place - to the antitheft amplifier 10, which will send the amplified signal provided on its output to both the driver bridge 5' for the AVAS based acoustic transducer 6, and to the driver bridge 7 for the antitheft-based acoustic transducer 8. Upon detection of which among the AVAS condition and antitheft condition takes actually place, control unit 1 is configured to automatically perform a step of activation of first enabling output 1e for the AVAS condition or second enabling output 1f for the antitheft condition. When activation of any of such a first or second enabling output is performed, first driver bridge 5' or second driver bridge 7 may be, selectively and in particular alternatively activated.

To generalize the specific operations of each of the previously disclosed first, second and third example embodiments of the controller 100, figure 5 helps the reader to appreciate the general steps of operation performed by the present disclosure. Figure 5 in particular illustrates a flow diagram depicting example operations which may be taken by the apparatus of Figures 1-3 for an acoustic alerting system for an electric/hybrid vehicle as described herein.

It should be appreciated that Figure 5 comprises some operations which are illustrated in a solid border and some operations which are illustrated with a dashed border. The operations which are comprised in a solid border are operations which are comprised in the broadest example embodiment. The operations which are comprised in a dashed border are example embodiments which may be comprised in, or a part of, or are further operations which may be taken in addition to the operations of the broader example embodiments. It should be appreciated that these operations need not be performed in order, in particular in the order they appear in figure. Furthermore, it should be appreciated that not all the operations need to be performed. The example operations may be performed in any order and in any combination.

### Operation block 40

The example embodiments comprise processing (block 40) vehicle state information received from a data base. The control unit 1 and/or generating means is configured to process the vehicle state information received from the vehicle bus.

As explained on conjunction with Figures 1-3, the control unit is configured to receive vehicle state information from the vehicle bus. The vehicle state information will be related to either an AVAS condition or an antitheft condition. Vehicle state information will be in the form of a specifically configured electric signal.

Such an electric signal has at least a first specific configuration for AVAS condition and a second specific configuration for antitheft condition. When the vehicle state information relates to an antitheft condition, control unit 1 may be configured to detect such an antitheft condition even without specific data or electric signal transmitted on the vehicle bus. This is the case in particular when control unit 1 is configured to detect a lack of power from vehicle battery 14.

### Operation block 42

Upon receiving the information from the vehicle bus, the control unit 1 will determine (block 42) whether the vehicle state information is related to either an AVAS condition or an antitheft condition.

Based on which condition the vehicle state information is related to, the corresponding alarm system will be activated. According to some of the example embodiments, an inability to read the vehicle bus is indicative of an antitheft condition. According to some further of the example embodiment, a lack of electric power from a vehicle battery, optionally connected to the controller 100, is a further indicative of an antitheft condition.

### Operation block 44

If the vehicle state information is related to an antitheft condition, the example operations further comprise generating (block 44) a control signal. The control unit 1 and/or the generating means is configured to generate the control signal. As explained in Figures 1-3 the control signal may be used to provide an activation of the antitheft-based acoustic transducer.

### Operation block 46

According to some of the example embodiments, the generating (block 44) further comprises sending (block 46) the control signal to a first output in communication with a first acoustic transducer for activation of the antitheft alert. The control unit 1 and/or the generating means is configured to send the control signal to the first output in communication with the first acoustic transducer.

According to some of the example embodiments, the first acoustic transducer may be a piezoelectric acoustic transducer. As illustrated in the example provided in Figure 1, the control signal is sent to a driver bridge 7 in the first output. In the example provided in Figure 2, the control signal 'EN_antitheft' is sent to the first amplifier 10. In the example provided in Figure 3, the control signal 'EN_antitheft' is sent to a first driver bridge 7.

### Example operation block 48

According to some of the example embodiments, the example operations may further comprise selectively activating (block 48) the first output. The control unit 1 and/or the generating means may be configured to selectively activate the first output.

In the example provided in Figure 1, such selective activation is provided by either generating the control signal (operation block 44) or generating an acoustic signal (operation block 54 to be discussed below). In Figure 1, the generation of the control signal will selectively activate the first acoustic transducer in the first output thereby selectively activating the antitheft alarm system. In Figure 1, the generation of the acoustic signal will selectively activate the second acoustic transducer in the second output thereby selectively activating the AVAS based alert system.

According to some of the example embodiments, specifically in the examples provide by Figures 2 and 3, different control signals 'EN_antitheft' and 'EN_AVAS' are used to activate either the antitheft alert system in the first output or the AVAS system in the second output, respectively. According to such example embodiments, for example as illustrated in Figures 2 and 3, in the presence of an antitheft condition, the signal generation block will also produce an acoustic signal with a constant envelope. The generated acoustic signal is applied to the first acoustic transducer.

### Example operation block 50

According to some of the example embodiments, the selectively activating (block 48) may further comprise, if the vehicle state information is related to an antitheft condition, sending (block 50) the control signal to a first amplifier in the first output for activation of the first acoustic transducer. The control unit 1 and/or generating means may be configured to send the control signal to the first amplifier in the first output for activation of the first acoustic transducer. It should be appreciated that the generated acoustic signal with a constant envelope, as discussed in relation to example operation block 48, is also sent to the first amplifier 10.

### Example operation 52

According to some of the example embodiments, the selectively activating (block 48) may further comprise, if the vehicle state information is related to an antitheft condition, sending (block 52) the control signal to a first driver bridge in the first output for activation of the first acoustic transducer. The control unit 1 and/or generating means may be configured to send the control signal to the first driver bridge in the first output for activation of the first acoustic transducer. It should be appreciated that the generated acoustic signal with a constant envelope, as discussed in relation to example operation 48, is also sent to the first driver bridge 7.

### Operation block 54

If it is determined that the vehicle state information is related to an AVAS condition, the example operations further comprise generating an acoustic signal with an envelope that varies over time. The generating is based on the vehicle state information. The control unit 1 via a signal generation block and/or the generating means is configured to generate the acoustic signal with the envelope that varies over time.

Operation block 54 is illustrated in Figures 1-3. As shown, the control unit 1 receives vehicle state information via the vehicle bus. After determining the vehicle state information is related to an AVAS condition, the signal generation block may thereafter be utilized to generate the acoustic signal. In the generation of the acoustic signal, a stored sound, in particular at least a part of the acoustic samples thereof, associated with the determined AVAS condition may be retrieved or determined from memory. According to some of the example embodiments, the memory may be a parallel flash memory. A variable attenuator may be utilized to provide the sound at the corresponding appropriate level. According to some of the example embodiments, a memory scanning speed may be varied in order to alter a tone of the stored sound in accordance with the associated vehicle state information.

### Operation block 56

Upon generating (block 54) the acoustic signal, the acoustic signal may thereafter be sent (block 56) to a second output in communication with a second acoustic transducer for activation of the AVAS alert. The control unit 1, for example via the signal generating block, and/or the generating means will send the acoustic signal to the second output in communication with the second acoustic transducer.

Operation block 56 is illustrated in Figures 1-3. According to some of the example embodiments, the second acoustic transducer may be a magneto-dynamic acoustic transducer, which is also known as a loud speaker.

### Example operation block 58

According to some of the example embodiments, the example operations may further comprise, if the vehicle state information is related to an AVAS condition, generating (block 58) a control signal. The control unit 1 and/or the generating means may be configured to generate the control signal.

Example operation block 58 is illustrated in Figures 2 and 3. In Figures 2 and 3, a control signal 'EN_AVAS' is provided upon the determination of an AVAS condition. The 'EN_AVAS' control signal is utilized to selectively activate the AVAS alert based system.

### Example operation block 60

According to some of the example embodiments, the example operations may further comprise selectively activating 60 the second output. The control unit 1 and/or the generating means may be configured to selectively activate the second output.

In the example provided in Figure 1, such selective activation is provided by either generating the control signal (operation block 44) or generating an acoustic signal (operation block 54 to be discussed below). In Figure 1, the generation of the control signal will selectively activate the first acoustic transducer in the first output thereby selectively activating the antitheft alarm system. In Figure 1, the generation of the acoustic signal will selectively activate the second acoustic transducer in the second output thereby selectively activating the AVAS based alert system.

In the example provide by Figures 2 and 3, different control signals 'EN_antitheft' and 'EN_AVAS' are used to activate either the antitheft alert system in the first output or the AVAS system in the second output, respectively. According to such example embodiments, for example as illustrated in Figures 2 and 3, in the presence of an AVAS condition, the signal generation block will also produce the acoustic signal with the envelope that varies with time, as discussed in operation block 54. The generated acoustic signal is applied to the second acoustic transducer.

### Example operation block 62

According to some of the example embodiments, upon the generating (block 58) and sending (block 60), the example operations may further comprise sending 62 the control signal to a second amplifier in the second output for activation of the second acoustic transducer. The control unit 1 and/or generating means may be configured to send the control signal to the second amplifier in the second output for activation of the second acoustic transducer.

### Example operation block 64

According to some of the example embodiments, upon the generating (block 58) and sending (block 60), the example operations may further comprise sending 64 the control signal to a second driver bridge in the second output for activation of the second acoustic transducer. The control unit 1 and/or generating means may be configured to send the control signal to the second driver bridge in the second output for activation of the second acoustic transducer.

According to a further example of the disclosure, there is provided a vehicle, provided with a car frame, a propulsion motor comprising at least one between an internal combustion engine and an electric motor, mechanically connected to at least one traction wheel of the vehicle. The vehicle further comprises at least a data processing unit, preferably an ECU, that according to figure 4 is schematically represented by the microprocessor block 200. Such a data processing unit is electrically connected to a vehicle bus 13 on which electric signals travel in a known way. To the vehicle bus 13 further input sensing devices 201, 202 are connected. The vehicle according to the present disclosure further comprises a controller 100 according to any of the previously described embodiments. The vehicle further comprises at least an acoustic transducer, in particular an AVAS based acoustic transducer 6, which is installed outside the controller 100 body, and in particular in a position which can be suitable to make the sound produced therefrom be clearly audible outside of the vehicle. Such a position may be close to the rear or front bumper of the vehicle. Vehicle further comprises at least a battery 14, which powers the data processing unit 200 and other electric components of the vehicle. Such a battery may further feed electric power to the controller 100, preferably but in a non-limiting extent, via a sealed connector.

According to a further aspect of the present disclosure, there is provided a computer program, stored in a memory support and suitable to be executed on a data processing unit, in particular the control unit 1 of the controller 100. The computer program may advantageously be in a form of a firmware software for the data processing unit. The computer program object of the present disclosure is configured to make the control unit 1 perform the operation procedures previously disclosed.

The various example embodiments described herein are described in the general context of method steps or processes, which may be implemented in one aspect by a computer program product, embodied in a computer-readable medium, comprising computer-executable instructions, such as program code, executed by computers in networked environments. A computer-readable medium may comprise removable and non-removable storage devices comprising, but not limited to, Read Only Memory (ROM), Random Access Memory (RAM), compact discs (CDs), digital versatile discs (DVD), etc. Generally, program modules may comprise routines, programs, objects, components, data structures, etc. that perform particular tasks or implement particular abstract data types. Computer-executable instructions, associated data structures, and program modules represent examples of corresponding acts for implementing the functions described in such steps or processes.

Throughout the description and claims of this specification, the words "comprise" and "contain" and variations of them mean "including but not limited to", and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

In the drawings and specification, there have been disclosed exemplary embodiments. However, many variations and modifications may be made to these embodiments. Accordingly, although specific terms are employed, they are used in a generic and descriptive sense only and not for purposes of limitation, the scope of the embodiments being defined by the following claims.

## Claims

1. An apparatus (100) for an acoustic alerting system for an electric/hybrid vehicle, the apparatus comprising:
- a control unit (1) configured to receive, from a vehicle bus, vehicle state information;
- a first acoustic transducer (8) for antitheft-based alerts;
- a first output in communication with the first acoustic transducer (8) for antitheft-based alerts;
- a second output configured for communication with a second acoustic transducer (6) for Acoustic Vehicle Alerting System, AVAS, based alerts;
wherein,
- if the vehicle state information is related to an antitheft condition, the control unit (1) is further configured to generate a control signal and send said control signal to the first output for activation of the first acoustic transducer (8); and
- if the vehicle state information is related to an AVAS condition, the control unit (1) is further configured to access a signal generator block (2, 3, 4) configured to generate an acoustic signal, based on the vehicle state information including at least one vehicle's running parameter, the control unit is further configured to send said acoustic signal to the second output for activation of the second acoustic transducer,
said apparatus (100) being **characterized in that** the signal generator block (2, 3, 4) comprises at least one memory (2) storing acoustic signal samples, and wherein at least if the vehicle state information is related to an AVAS condition said signal generator block (2, 3, 4) is configured to generate said acoustic signal by causing playing back at least part of said acoustic signal samples contained in said memory (2), wherein, if the vehicle state information is related to the AVAS condition, the control unit (1) is configured to cause adaptation of said acoustic signal in accordance to said at least one vehicle's running parameter, said vehicle's running parameter comprising at least an electronic data of speed and/or acceleration, and wherein said adaptation at least comprises a frequency shift of the acoustic signal depending at least on said electronic data.

2. The apparatus of claim 1, wherein said control unit (1) is configured to cause said playback of at least part of said acoustic signal samples with a playback frequency depending on said at least one vehicle's running parameter, said playback frequency imposing said frequency shift.

3. The apparatus according to anyone of the previous claims, wherein said signal generator block (2, 3, 4) further comprises a variable attenuator (4) configured to either attenuate or amplify the acoustic signal to reflect the vehicle's running parameter, said vehicle's running parameter preferably comprising at least an electronic data of speed and/or acceleration, the variable attenuator (4) optionally adapting either attenuation or amplification of said acoustic signal in accordance to at least said electronic data of speed and/or acceleration and in particular by producing on an output thereof an acoustic signal whose power and/or amplitude is directly proportional to said electronic data of at least acceleration.

4. The apparatus of claim 3, wherein said variable attenuator (4) is electrically connected downstream to an output of said memory (2), said variable attenuator (4) being configured for receiving frequency shifted acoustic signal samples.

5. The apparatus according to any one of the preceding claims, wherein if the vehicle state information is related to an antitheft condition, said control signal generated by said control unit (1) further provides an acoustic signal modulated according to a predetermined modulation scheme for activation of the first acoustic transducer (8).

6. The apparatus according to any one of the preceding claims, wherein if the vehicle state information is related to an antitheft condition said signal generator block (2, 3, 4) is configured to generate said acoustic signal by causing playing back at least part of said acoustic signal samples contained in said memory (2).

7. The apparatus according to anyone of the previous claims, the apparatus comprising at least a backup battery (11), electrically connected with at least said control unit (1); said apparatus (100) comprising at least a backup powering configuration wherein said backup battery (11) feeds said control unit (1) leaving said memory (2) unpowered, said backup powering configuration taking place in correspondence of said antitheft condition.

8. The apparatus of any of claims 1-7, wherein the control signal is a first control signal and wherein the control unit (1) is further configured to generate a second control signal if the vehicle state information is related to an AVAS condition; wherein the control unit (1) is further configured to:
- if the first control signal is generated, selectively activate a first amplifier (7) in connection to the first output via a transmission of the first control signal to the first amplifier (7); and
- if the second control signal is generated, selectively activate a second amplifier (5) in connection to the second output via a transmission of the second control signal to the second amplifier (5).

9. A method for providing an acoustic alerting system for an electric/hybrid vehicle, the method comprising:
- electronically processing vehicle state information received from a vehicle bus (13);
- if the vehicle state information is related to an antitheft condition, generating, via a control unit (1), a control signal and sending the control signal to a first output in communication with a first acoustic transducer (8) for activation of an antitheft alert; and
- if the vehicle state information is related to an Acoustic Vehicle Alerting System, AVAS, condition, generating, via the control unit (1), an acoustic signal, based on the vehicle state information and sending the acoustic signal to a second output in communication with a second acoustic transducer (6) for activation of an AVAS alert, said method being **characterized in that** the generating of the acoustic signal further comprises retrieving, from a memory (2), one or more acoustic signal samples, associated with the AVAS condition, and providing for playing them back; wherein the generating of the acoustic signal further comprises :
- determining at least electronic data of speed and/or acceleration from data received from said vehicle bus (13) or receiving electronic data of speed and/or acceleration from said vehicle bus (13); and
- adapting the playback of the acoustic signal samples by changing the reproduction speed thereof thereby resulting in a rigid shifting in frequency, in accordance to said at least electronic data of speed and/or acceleration determined or received from said vehicle bus.

10. The method of claim 9, wherein if the vehicle state information is related to an antitheft condition, said control signal is modulated according to a predetermined modulation scheme for activation of the first acoustic transducer (8); said control signal comprising an acoustic signal being generated by said control unit (1) without accessing said memory (2).

11. The method of claim 9, comprising if the vehicle state information is related to an antitheft condition further generating an acoustic signal by retrieving from or accessing to a memory (2), wherein a sound or acoustic file is stored, said file being associated at least with the AVAS condition, and providing for playing it back.

12. The method of anyone of claims 9-11, comprising a step of feeding an amplifier (10) with said acoustic signal to produce an amplified acoustic signal, said amplifier (10) being commonly used both if the vehicle state information is related to an antitheft condition and if the vehicle state information is related to an AVAS condition; said method further comprising selectively enabling either said first acoustic transducer (8) or said second acoustic transducer (6) in accordance respectively to said antitheft condition or AVAS condition and feeding said amplified acoustic signal to said first acoustic transducer (8) and second acoustic transducer (6).

13. The method of anyone of claims 9-12, wherein said control unit (1) is normally fed by a first battery (14), optionally a vehicle battery, and comprising providing a backup battery (11) electrically connected to at least said control unit (1) and to an amplifier or driver bridge (7) for said fist acoustic transducer (8); said method further comprising a step of actuating a backup powering configuration wherein said backup battery (11) feeds said control unit (1) leaving said memory (2) unpowered, said backup powering configuration taking place in correspondence of said antitheft condition.

## Patentansprüche

1. Vorrichtung (100) für ein akustisches Alarmsystem für ein Elektro-/Hybridfahrzeug, wobei die Vorrichtung Folgendes umfasst:
- eine Steuereinheit (1), die konfiguriert ist, um, von einem Fahrzeugbus, Fahrzeugstatusinformationen zu empfangen;
- einen ersten akustischen Wandler (8) für diebstahlschutzbasierte Alarme;
- einen ersten Ausgang in Kommunikation mit dem akustischen Wandler (8) für diebstahlschutzbasierte Alarme;
- einen zweiten Ausgang, der zur Kommunikation mit einem zweiten akustischen Wandler (6) für Acoustic-Vehicle-Alerting-System(AVAS, akustisches Fahrzeugalarmsystem)-basierte Alarme konfiguriert ist;
wobei,
- falls sich die Fahrzeugstatusinformationen auf einen Diebstahlschutzzustand beziehen, die Steuereinheit (1) ferner konfiguriert ist, um ein Steuersignal zu generieren und das genannte Steuersignal an den ersten Ausgang zur Aktivierung des ersten akustischen Wandlers (8) zu senden; und
- falls sich die Fahrzeugstatusinformationen auf einen AVAS-Zustand beziehen, die Steuereinheit (1) ferner konfiguriert ist, um auf einen Signalgeneratorblock (2, 3, 4) zuzugreifen, der konfiguriert ist, um ein akustisches Signal, basierend auf den Fahrzeugstatusinformationen, die zumindest einen Fahrzeugbetriebsparameter beinhalten, zu erzeugen, wobei die Steuereinheit ferner konfiguriert ist, um das genannte akustische Signal an den zweiten Ausgang zur Aktivierung des zweiten akustischen Wandlers zu senden,
die genannte Vorrichtung (100) **dadurch gekennzeichnet ist, dass** der Signalgeneratorblock (2, 3, 4) zumindest einen Speicher (2) umfasst, der akustische Signalproben speichert, und wobei zumindest, falls sich die Fahrzeugstatusinformationen auf einen AVAS-Zustand beziehen, der genannte Signalgeneratorblock (2, 3, 4) konfiguriert ist, um das genannte akustische Signal zu generieren, indem bewirkt wird, dass zumindest ein Teil der genannten akustischen Signalproben, die in dem genannten Speicher (2) enthalten sind, wiedergegeben wird, wobei, falls sich die Fahrzeugstatusinformationen auf den AVAS-Zustand beziehen, die Steuereinheit (1) konfiguriert ist, um eine Anpassung des genannten akustischen Signals in Übereinstimmung mit dem genannten zumindest einen Fahrzeugbetriebsparameter zu bewirken, wobei der genannte Fahrzeugbetriebsparameter zumindest elektronische Daten für Geschwindigkeit und/oder Beschleunigung umfasst und wobei die genannte Anpassung zumindest eine Frequenzverschiebung des akustischen Signals umfasst, abhängig zumindest von den genannten elektronischen Daten.

2. Vorrichtung nach Anspruch 1, wobei die genannte Steuereinheit (1) konfiguriert ist, um die genannte Wiedergabe von zumindest einem Teil der genannten akustischen Signalproben mit einer Wiedergabefrequenz, abhängig von dem genannten zumindest einen Fahrzeugbetriebsparameter, zu bewirken, wobei die genannte Wiedergabefrequenz die genannte Frequenzverschiebung erzeugt.

3. Vorrichtung nach einem der vorhergehenden Ansprüche, wobei der genannte Signalgeneratorblock (2, 3, 4) ferner ein variables Dämpfungsglied (4) umfasst, das konfiguriert ist, um das akustische Signal entweder zu dämpfen oder zu verstärken, um den Fahrzeugbetriebsparameter zu reflektieren, wobei der genannte Fahrzeugbetriebsparameter bevorzugt zumindest elektronische Daten für Geschwindigkeit und/oder Beschleunigung umfasst, wobei das variable Dämpfungsglied (4) optional entweder die Dämpfung oder Verstärkung des genannten akustischen Signals in Übereinstimmung mit zumindest den genannten elektronischen Daten für Geschwindigkeit und/oder Beschleunigung anpasst, und insbesondere durch Produzieren auf einem Ausgang von diesem eines akustischen Signals, dessen Leistung und/oder Amplitude mit den genannten elektronischen Daten zumindest für Beschleunigung direkt proportional sind/ist.

4. Vorrichtung nach Anspruch 3, wobei das genannte variable Dämpfungsglied (4) stromabwärts mit einem Ausgang des genannten Speichers (2) elektrisch verbunden ist, wobei das genannte variable Dämpfungsglied (4) zum Empfangen von frequenzverschobenen akustischen Signalproben konfiguriert ist.

5. Vorrichtung nach einem der vorhergehenden Ansprüche, wobei, falls sich die Fahrzeugstatusinformationen auf einen Diebstahlschutzzustand beziehen, das genannte Steuersignal, das von der genannten Steuereinheit (1) generiert wird, ferner ein akustisches Signal bereitstellt, das gemäß einem vorher festgelegten Modulationsschema moduliert wird, zur Aktivierung des ersten akustischen Wandlers (8).

6. Vorrichtung nach einem der vorhergehenden Ansprüche, wobei, falls sich die Fahrzeugstatusinformationen auf einen Diebstahlschutzzustand beziehen, der genannte Signalgeneratorblock (2, 3, 4) konfiguriert ist, um das genannte akustische Signal zu generieren, indem bewirkt wird, dass zumindest ein Teil der genannten akustischen Signalproben, die in dem genannten Speicher (2) enthalten sind, wiedergegeben wird.

7. Vorrichtung nach einem der vorhergehenden Ansprüche, wobei die Vorrichtung zumindest eine Backup-Batterie (11) umfasst, die zumindest mit der genannten Steuereinheit (1) elektrisch verbunden ist; wobei die Vorrichtung (100) zumindest eine Backup-Bestromungs-Konfiguration umfasst, wobei die genannte Backup-Batterie (11) die genannte Steuereinheit (1) speist, wobei der genannte Speicher (2) unbestromt bleibt, wobei die genannte Backup-Bestromungs-Konfiguration entsprechend dem genannten Diebstahlschutzzustand stattfindet.

8. Vorrichtung nach einem der Ansprüche 1-7, wobei das Steuersignal ein erstes Steuersignal ist und wobei die Steuereinheit (1) ferner konfiguriert ist, um ein zweites Steuersignal zu generieren, falls sich die Fahrzeugstatusinformationen auf einen AVAS-Zustand beziehen; wobei die Steuereinheit (1) ferner für Folgendes konfiguriert ist:
- falls das erste Steuersignal generiert wird, selektives Aktivieren eines ersten Verstärkers (7) in Verbindung mit dem ersten Ausgang über eine Übertragung des ersten Steuersignals an den ersten Verstärker (7); und
- falls das zweite Steuersignal generiert wird, selektives Aktivieren eines zweiten Verstärkers (5) in Verbindung mit dem zweiten Ausgang über eine Übertragung des zweiten Steuersignals an den zweiten Verstärker (5).

9. Verfahren zum Bereitstellen eines akustischen Alarmsystems für ein Elektro-/Hybridfahrzeug, wobei das Verfahren Folgendes umfasst:
- elektronisches Verarbeiten von Fahrzeugzustandsinformationen, die von einem Fahrzeugbus (13) empfangen werden;
- falls sich die Fahrzeugstatusinformationen auf einen Diebstahlschutzzustand beziehen, Generieren, über eine Steuereinheit (1), eines Steuersignals und Senden des Steuersignals an einen ersten Ausgang in Kommunikation mit einem ersten akustischen Wandler (8) zur Aktivierung eines Diebstahlschutzalarms; und
- falls sich die Fahrzeugstatusinformationen auf einen Acoustic-Vehicle-Alerting-System(AVAS)-Zustand beziehen, Generieren, über die Steuereinheit (1), eines akustischen Signals, basierend auf den Fahrzeugstatusinformationen, und Senden des akustischen Signals an einen zweiten Ausgang in Kommunikation mit einem zweiten akustischen Wandler (6) zur Aktivierung eines AVAS-Alarms,
wobei das genannte Verfahren **dadurch gekennzeichnet ist, dass** das Generieren des akustischen Signals ferner das Abrufen, aus einem Speicher (2), von einer oder mehreren akustischen Signalproben, die mit dem AVAS-Zustand assoziiert sind, und das Bereitstellen zum Wiedergeben von diesen umfasst; wobei das Generieren des akustischen Signals ferner Folgendes umfasst:
- Bestimmen von zumindest elektronischen Daten für Geschwindigkeit und/oder Beschleunigung aus den Daten, die von dem genannten Fahrzeugbus (13) empfangen werden, oder Empfangen von elektronischen Daten für Geschwindigkeit und/oder Beschleunigung von dem genannten Fahrzeugbus (13); und
- Anpassen der Wiedergabe der akustischen Signalproben durch Ändern der Reproduktionsgeschwindigkeit davon, was in einer starren Verschiebung der Frequenz resultiert, in Übereinstimmung mit den genannten zumindest elektronischen Daten für Geschwindigkeit und/oder Beschleunigung, die bestimmt werden oder von dem genannten Fahrzeugbus empfangen werden.

10. Verfahren nach Anspruch 9, wobei, falls sich die Fahrzeugstatusinformationen auf eine Diebstahlschutzbedingung beziehen, das genannte Steuersignal gemäß einem vorher festgelegten Modulationsschema moduliert wird, zur Aktivierung des ersten akustischen Wandlers (8); wobei das genannte Steuersignal ein akustisches Signal umfasst, das von der genannten Steuereinheit (1) ohne Zugreifen auf dem genannten Speicher (2) generiert wird.

11. Verfahren nach Anspruch 9, das, falls sich die Fahrzeugstatusinformationen auf einen Diebstahlschutzzustand beziehen, ferner das Generieren eines akustischen Signals durch Abrufen von einem oder Zugreifen auf einen Speicher (2), in dem eine Tondatei oder akustische Datei gespeichert ist, wobei die genannte Datei zumindest mit dem AVAS-Zustand assoziiert ist, und das Bereitstellen zum Wiedergeben von diesem umfasst.

12. Verfahren nach einem der Ansprüche 9-11, das einen Schritt des Speisens eines Verstärkers (10) mit dem genannten akustischen Signal umfasst, um ein verstärktes akustisches Signal zu produzieren, wobei der genannte Verstärker (10) gewöhnlich sowohl verwendet wird, falls sich die Fahrzeugstatusinformationen auf einen Diebstahlschutzzustand beziehen, als auch, falls sich die Fahrzeugstatusinformationen auf einen AVAS-Zustand beziehen; wobei das genannte Verfahren ferner das selektive Inbetriebsetzen entweder des genannten ersten akustischen Wandlers (8) oder des genannten zweiten akustischen Wandlers (6) jeweils in Übereinstimmung mit dem genannten Diebstahlschutzzustand oder AVAS-Zustand und das Speisen des genannten verstärkten akustischen Signals an den genannten ersten akustischen Wandler (8) und zweiten akustischen Wandler (6) umfasst.

13. Verfahren nach einem der Ansprüche 9-12, wobei die Steuereinheit (1) normalerweise von einer ersten Batterie (14), optional einer Fahrzeugbatterie, gespeist wird, und umfassend das Bereitstellen einer Backup-Batterie (11), die zumindest mit der genannten Steuereinheit (1) und mit einem Verstärker oder einer Treiberbrücke (7) elektrisch verbunden ist, für den genannten ersten akustischen Wandler (8); wobei das genannte Verfahren ferner einen Schritt des Regelns einer Backup-Bestromungs-Konfiguration umfasst, wobei die genannte Backup-Batterie (11) die genannte Steuereinheit (1) speist, wobei der genannte Speicher (2) unbestromt bleibt, wobei die genannte Backup-Bestromungs-Konfiguration entsprechend dem genannten Diebstahlschutzzustand stattfindet.

## Revendications

1. Un appareil (100) destiné à un système d'alerte acoustique pour un véhicule électrique/hybride, l'appareil comprenant :
- une unité de commande (1) configurée de façon à recevoir, à partir d'un bus de véhicule, des informations d'état de véhicule,
- un premier transducteur acoustique (8) destiné à des alertes basées sur un antivol,
- une première sortie en communication avec le premier transducteur acoustique (8) destinée à des alertes basées sur un antivol,
- une deuxième sortie configurée pour une communication avec un deuxième transducteur acoustique (6) destinée à des alertes basées sur un système d'alerte de véhicule acoustique, AVAS,
où,
- si les informations d'état de véhicule portent sur une situation d'antivol, l'unité de commande (1) est configurée en outre de façon à générer un signal de commande et à envoyer ledit signal de commande à la première sortie pour l'activation du premier transducteur acoustique (8), et
- si les informations d'état de véhicule portent sur une situation AVAS, l'unité de commande (1) est configurée en outre de façon à accéder à un bloc générateur de signaux (2, 3, 4) configuré de façon à générer un signal acoustique, en fonction des informations d'état de véhicule comprenant au moins un paramètre de fonctionnement de véhicule, l'unité de commande est configurée en outre de façon à envoyer ledit signal acoustique à la deuxième sortie pour l'activation du deuxième transducteur acoustique,
ledit appareil (100) étant **caractérisé en ce que** le bloc générateur de signaux (2, 3, 4) comprend au moins une mémoire (2) conservant en mémoire des échantillons de signaux acoustiques, et où au moins, si les informations d'état de véhicule portent sur une situation AVAS, ledit bloc générateur de signaux (2, 3, 4) est configuré de façon à générer ledit signal acoustique en amenant la reproduction d'au moins une partie desdits échantillons de signaux acoustiques contenus dans ladite mémoire (2), où, si les informations d'état de véhicule portent sur la situation AVAS, l'unité de commande (1) est configurée de façon à amener une adaptation dudit signal acoustique conformément audit au moins un paramètre de fonctionnement de véhicule, ledit paramètre de fonctionnement de véhicule comprenant au moins des données électroniques de vitesse et/ou d'accélération, et où ladite adaptation comprend au moins un décalage de fréquence du signal acoustique en fonction au moins desdites données électroniques.

2. L'appareil selon la Revendication 1, où ladite unité de commande (1) est configurée de façon à amener ladite reproduction d'au moins une partie desdits échantillons de signaux acoustiques avec une fréquence de reproduction qui dépend dudit au moins un paramètre de fonctionnement de véhicule, ladite fréquence de reproduction imposant ledit décalage de fréquence.

3. L'appareil selon l'une quelconque des Revendications précédentes, où ledit bloc générateur de signaux (2, 3, 4) comprend en outre un atténuateur variable (4) configuré de façon à soit atténuer ou amplifier le signal acoustique de façon à refléter le paramètre de fonctionnement de véhicule, ledit paramètre de fonctionnement de véhicule comprenant de préférence au moins des données électroniques de vitesse et/ou d'accélération, l'atténuateur variable (4) adaptant éventuellement soit l'atténuation ou l'amplification dudit signal acoustique conformément à au moins lesdites données électroniques de vitesse et/ou d'accélération et plus particulièrement par la production sur une sortie de celui-ci d'un signal acoustique dont la puissance et/ou l'amplitude est directement proportionnelle auxdites données électroniques d'au moins l'accélération.

4. L'appareil selon la Revendication 3, où ledit atténuateur variable (4) est électriquement raccordé en aval à une sortie de ladite mémoire (2), ledit atténuateur variable (4) étant configuré de façon à recevoir des échantillons de signaux acoustiques décalés en fréquence.

5. L'appareil selon l'une quelconque des Revendications précédentes, où, si les informations d'état de véhicule portent sur une situation d'antivol, ledit signal de commande généré par ladite unité de commande (1) fournit en outre un signal acoustique modulé en fonction d'un mécanisme de modulation prédéterminé destiné à l'activation du premier transducteur acoustique (8).

6. L'appareil selon l'une quelconque des Revendications précédentes, où, si les informations d'état de véhicule portent sur une situation d'antivol, ledit bloc générateur de signaux (2, 3, 4) est configuré de façon à générer ledit signal acoustique en amenant la reproduction d'au moins une partie desdits échantillons de signaux acoustiques contenus dans ladite mémoire (2).

7. L'appareil selon l'une quelconque des Revendications précédentes, l'appareil comprenant au moins une batterie de secours (11), électriquement raccordée à au moins ladite unité de commande (1), ledit appareil (100) comprenant au moins une configuration d'alimentation de secours où ladite batterie de secours (11) alimente ladite unité de commande (1), laissant ladite mémoire (2) non alimentée, ladite configuration d'alimentation de secours se déroulant en correspondance avec ladite situation d'antivol.

8. L'appareil selon l'une quelconque des Revendications 1 à 7, où le signal de commande est un premier signal de commande et où l'unité de commande (1) est configurée en outre de façon à générer un deuxième signal de commande si les informations d'état de véhicule portent sur une situation AVAS, où l'unité de commande (1) est configurée en outre de façon à :
- si le premier signal de commande est généré, activer de manière sélective un premier amplificateur (7) raccordé à la première sortie par l'intermédiaire d'une transmission du premier signal de commande au premier amplificateur (7), et
- si le deuxième signal de commande est généré, activer de manière sélective un deuxième amplificateur (5) raccordé à la deuxième sortie par l'intermédiaire d'une transmission du deuxième signal de commande au deuxième amplificateur (5).

9. Un procédé de fourniture d'un système d'alerte acoustique destiné à un véhicule électrique/hybride, le procédé comprenant :
- le traitement électronique d'informations d'état de véhicule reçues d'un bus de véhicule (13),
- si les informations d'état de véhicule portent sur une situation d'antivol, la génération, par l'intermédiaire d'une unité de commande (1), d'un signal de commande et l'envoi du signal de commande à une première sortie en communication avec un premier transducteur acoustique (8) destiné à l'activation d'une alerte d'antivol, et
- si les informations d'état de véhicule portent sur une situation de système d'alerte de véhicule acoustique, AVAS, la génération, par l'intermédiaire de l'unité de commande (1), d'un signal acoustique, en fonction des informations d'état de véhicule et l'envoi du signal acoustique à une deuxième sortie en communication avec un deuxième transducteur acoustique (6) destiné à l'activation d'une alerte AVAS,
ledit procédé étant **caractérisé en ce que** la génération du signal acoustique comprend en outre la récupération, à partir d'une mémoire (2), d'un ou de plusieurs échantillons de signaux acoustiques, associés à la situation AVAS, et la réalisation de leur reproduction, où la génération du signal acoustique comprend en outre :
- la détermination d'au moins des données électroniques de vitesse et/ou d'accélération à partir de données reçues dudit bus de véhicule (13) ou la réception de données électroniques de vitesse et/ou d'accélération à partir dudit bus de véhicule (13), et
- l'adaptation de la reproduction des échantillons de signaux acoustiques par la modification de la vitesse de reproduction de ceux-ci, résultant ainsi en un décalage en fréquence rigide, conformément auxdites au moins données électroniques de vitesse et/ou d'accélération déterminées ou reçues dudit bus de véhicule.

10. Le procédé selon la Revendication 9, où, si les informations d'état de véhicule portent sur une situation d'antivol, ledit signal de commande est modulé en fonction d'un mécanisme de modulation prédéterminé destiné à l'activation du premier transducteur acoustique (8), ledit signal de commande comprenant un signal acoustique qui est généré par ladite unité de commande (1) sans accès à ladite mémoire (2).

11. Le procédé selon la Revendication 9, comprenant, si les informations d'état de véhicule portent sur une situation d'antivol, la génération en outre d'un signal acoustique par la récupération à partir de ou par l'accès à une mémoire (2), dans laquelle un fichier sonore ou acoustique est conservé en mémoire, ledit fichier étant associé à au moins la situation AVAS, et la réalisation de sa reproduction.

12. Le procédé selon l'une quelconque des Revendications 9 à 11, comprenant une opération d'alimentation d'un amplificateur (10) avec ledit signal acoustique de façon à produire un signal acoustique amplifié, ledit amplificateur (10) étant communément utilisé à la fois si les informations d'état de véhicule portent sur une situation d'antivol et si les informations d'état de véhicule portent sur une situation AVAS, ledit procédé comprenant en outre l'activation sélective soit dudit premier transducteur acoustique (8) ou dudit deuxième transducteur acoustique (6) conformément respectivement à ladite situation d'antivol ou ladite situation AVAS, et l'alimentation dudit signal acoustique amplifié vers ledit premier transducteur acoustique (8) et ledit deuxième transducteur acoustique (6).

13. Le procédé selon l'une quelconque des Revendications 9 à 12, où ladite unité de commande (1) est normalement alimentée par une première batterie (14), éventuellement une batterie de véhicule, et comprenant la fourniture d'une batterie de secours (11) électriquement raccordée à au moins ladite unité de commande (1) et à un pont d'entraînement ou d'amplificateur (7) destiné audit premier transducteur acoustique (8), ledit procédé comprenant en outre une opération d'actionnement d'une configuration d'alimentation de secours où ladite batterie de secours (11) alimente ladite unité de commande (1) laissant ladite mémoire (2) non alimentée, ladite configuration d'alimentation de secours se déroulant en correspondance avec ladite situation d'antivol.
